# EUROPEAN PATENT APPLICATION

(11) **EP 4 686 989 A1**
(43) Date of publication of application: **04.02.2026**
(21) Application number: 25192469.2
(22) Date of filing: 29.07.2025
(51) Int. Cl.: G05B 19/042, G05B 23/02

(54) **CONTROLLERS WITH AUTO-ADJUSTABLE IN-FIELD RECONFIGURABLE SENSORS**

(30) Priority: 31.07.2024 US 202463677756 P; 09.08.2024 US 202463681707 P; 08.07.2025 US 202519262361; 08.07.2025 WO PCT/US2025/036840
(71) Applicant: Cattron North America, Inc., Warren, OH 44483 (US)
(72) Inventor: DAVIS, Brett Allen, Warren, 44483 (US)
(74) Representative: Lind Edlund Kenamets Intellectual Property AB

(57) **Abstract**

Exemplary embodiments are disclosed of controllers (*e.g.,* control panels, *etc*.) with auto-adjustable in-field reconfigurable sensors (*e.g.,* auto-adjustable in-field reconfigurable pressure sensor, auto-adjustable in-field reconfigurable flow sensor, auto-adjustable in-field reconfigurable torque sensor, auto-adjustable in-field reconfigurable power consumption sensor, *etc*.). Further disclosed are exemplary embodiments of systems including controllers and auto-adjustable in-field reconfigurable sensors. Also disclosed are exemplary methods of automatically adjusting/reconfiguring sensors in the field to have narrower more focused sensor ranges, thereby increasing sensor resolution.

## Description

### FIELD

The present disclosure relates to controllers (*e.g.,* control panels, *etc.*) with auto-adjustable in-field reconfigurable sensors (*e.g*., auto-adjustable in-field reconfigurable pressure sensor, auto-adjustable in-field reconfigurable flow sensor, auto-adjustable in-field reconfigurable torque sensor, auto-adjustable in-field reconfigurable power consumption sensor, *etc.*)*.* The present disclosure also relates to systems including controllers and auto-adjustable in-field reconfigurable sensors. The present disclosure further relates to exemplary methods of automatically adjusting/reconfiguring sensors in the field to have narrower more focused sensor ranges, thereby increasing sensor resolution.

### BACKGROUND

This section provides background information related to the present disclosure which is not necessarily prior art.

Control panels are commonly used for controlling operation of engines, motors, and machines. This includes monitoring numerous parameters such as oil pressure, water pressure, engine torque, engine fuel consumption, water flow, vibration, *etc.*

### DRAWINGS

The drawings described herein are for illustrative purposes only of selected embodiments and not all possible implementations and are not intended to limit the scope of the present disclosure.

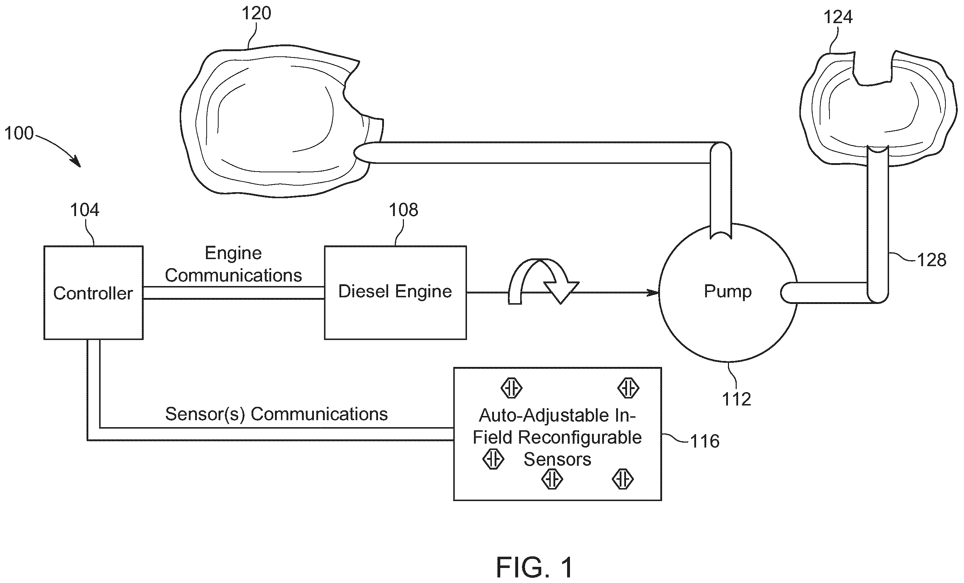

FIG. 1 illustrates an exemplary embodiment of a system that includes auto-adjustable in-field reconfigurable sensors and a controller (*e.g*., machine-learning controller, CANplus^{™} CP1000 control panel, *etc.*)*.* The controller is configured to be operable for controlling an engine, which, in turn, is operable for driving a pump. The system is configured to be operable for performing an automated process *e.g*., not a conventional manual process, without manual human intervention, *etc.*) during which the controller automatically determines what specific/narrower sensor range(s) are desired or needed, such as a pressure range for an auto-adjustable in-field reconfigurable pressure sensor, a flow range for an auto-adjustable in-field reconfigurable flow sensor, a torque range for an auto-adjustable in-field reconfigurable torque sensor, and/or a power consumption range for an auto-adjustable in-field reconfigurable power consumption sensor, *etc.* After automatically determining the desired or actual operating range(s) required for the particular system setup and application, the controller automatically adjusts/reconfigures the sensor(s) in the field to thereby set the sensor(s) to the desired narrower sensor range(s), thereby increasing sensor resolution.

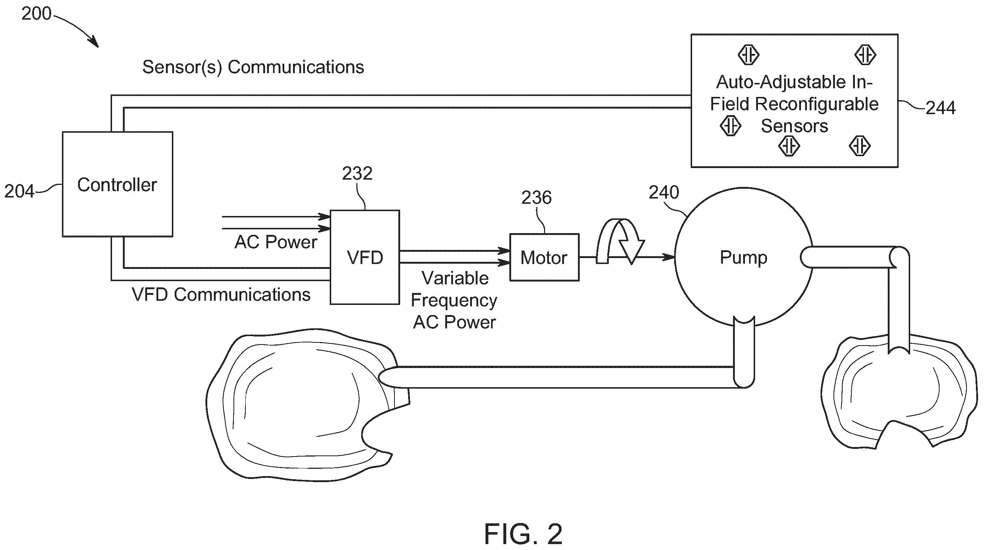

FIG. 2 illustrates an exemplary embodiment of a system that includes auto-adjustable in-field reconfigurable sensors and a controller (*e.g*., machine-learning controller, CANplus^{™} CP1000 control panel, *etc.*)*.* The controller is configured to be operable for controlling a variable frequency drive (VFD) and a motor, which, in turn, is operable for driving (*e.g*., mechanically spinning, *etc.*) a pump. The system is configured to be operable for performing an automated process (*e.g*., not a conventional manual process, without manual human intervention, *etc.*) during which the controller automatically determines what specific/narrower sensor range(s) are desired or needed, such as a pressure range for an auto-adjustable in-field reconfigurable pressure sensor, a flow range for an auto-adjustable in-field reconfigurable flow sensor, a torque range for an auto-adjustable in-field reconfigurable torque sensor, and/or a power consumption range for an auto-adjustable in-field reconfigurable power consumption sensor, *etc.* After automatically determining the desired or actual operating range(s) required for the particular system setup and application, the controller automatically adjusts/reconfigures the sensor(s) in the field to thereby set the sensor(s) to the desired narrower sensor range(s), thereby increasing sensor resolution.

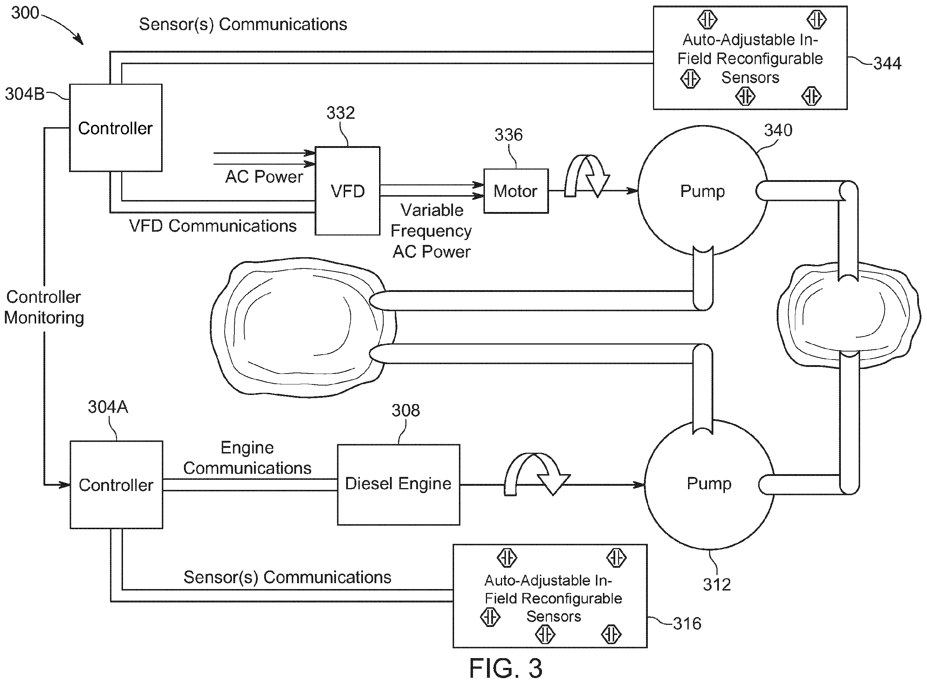

FIG. 3 illustrates an exemplary embodiment of a system that includes auto-adjustable in-field reconfigurable sensors and first and second controllers (*e.g*., machine-learning controllers, CANplus^{™} CP1000 control panels, *etc.*)*.* The first and second controllers are configured to be operable for respectively controlling a motor and an engine, which, in turn, are respectively operable for driving (*e.g.,* mechanically spinning, *etc.*) first and second pumps. The system is configured to be operable for performing an automated process (*e.g*., not a conventional manual process, without manual human intervention, *etc.*) during which the first and second controllers automatically determine what specific/narrower sensor ranges are desired or needed, such as a pressure range for an auto-adjustable in-field reconfigurable pressure sensor, a flow range for an auto-adjustable in-field reconfigurable flow sensor, a torque range for an auto-adjustable in-field reconfigurable torque sensor, and/or a power consumption range for an auto-adjustable in-field reconfigurable power consumption sensor, *etc.* After automatically determining the desired or actual operating ranges required for the particular system setup and application, the first and second controllers automatically adjust/reconfigure the sensors in the field to thereby set the sensors to the desired narrower sensor ranges, thereby increasing sensor resolution.

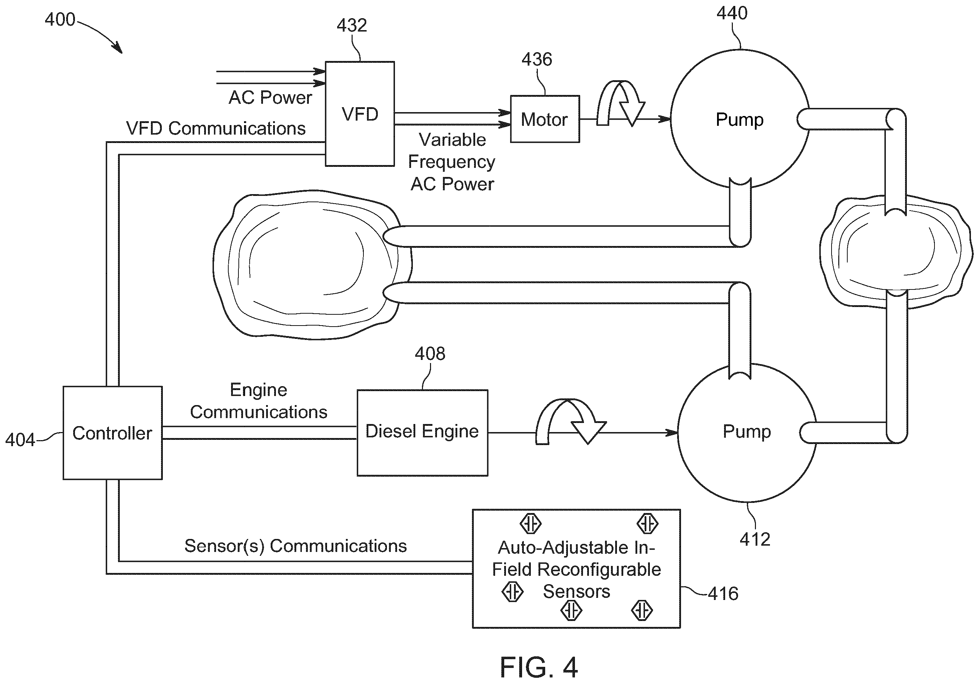

FIG. 4 illustrates an exemplary embodiment of a system that includes auto-adjustable in-field reconfigurable sensors and a controller (*e.g*., machine-learning controller, CANplus^{™} CP1000 control panel, *etc*.)*.* The controller is configured to be operable for controlling an engine, a variable frequency drive (VFD), and a motor. The engine and the motor are respectively operable for driving (*e.g.,* mechanically spinning, *etc.*) first and second pumps. The system is configured to be operable for performing an automated process (*e.g*., not a conventional manual process, without manual human intervention, *etc.*) during which the controller automatically determines what specific/narrower sensor range(s) are desired or needed, such as a pressure range for an auto-adjustable in-field reconfigurable pressure sensor, a flow range for an auto-adjustable in-field reconfigurable flow sensor, a torque range for an auto-adjustable in-field reconfigurable torque sensor, and/or a power consumption range for an auto-adjustable in-field reconfigurable power consumption sensor, *etc.* After automatically determining the desired or actual operating range(s) required for the particular system setup and application, the controller automatically adjusts/reconfigures the sensor(s) in the field to thereby set the sensor(s) to the desired narrower sensor range(s), thereby increasing sensor resolution.

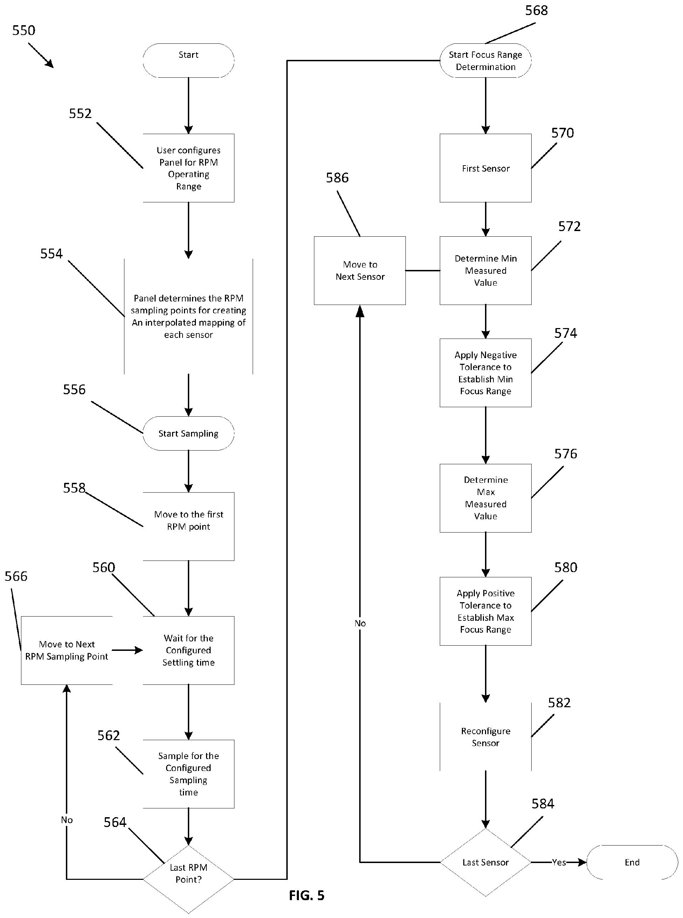

FIG. 5 illustrates a flowchart of an exemplary method in which a controller automatically adjusts/reconfigures sensor(s) in the field to have narrower more focused sensor range(s), thereby increasing sensor resolution.

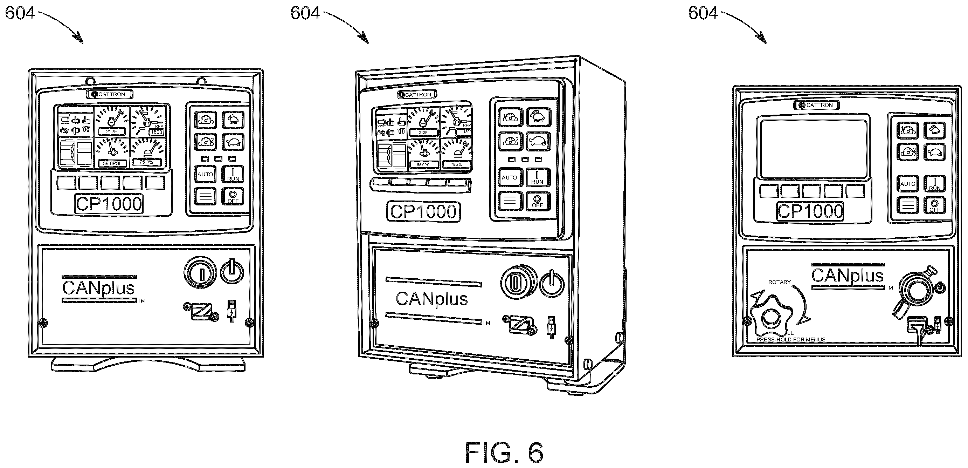

FIG. 6 shows an example CANplus^{™} CP1000 control panel that may be configured (*e.g*., algorithmically configured, provided with application programming or software, *etc.*) to be operable for performing an automated process (*e.g.,* not a conventional manual process, without manual human intervention, *etc.*) for automatically adjusting/reconfiguring sensors in the field to have narrower more focused sensor ranges, thereby increasing sensor resolution.

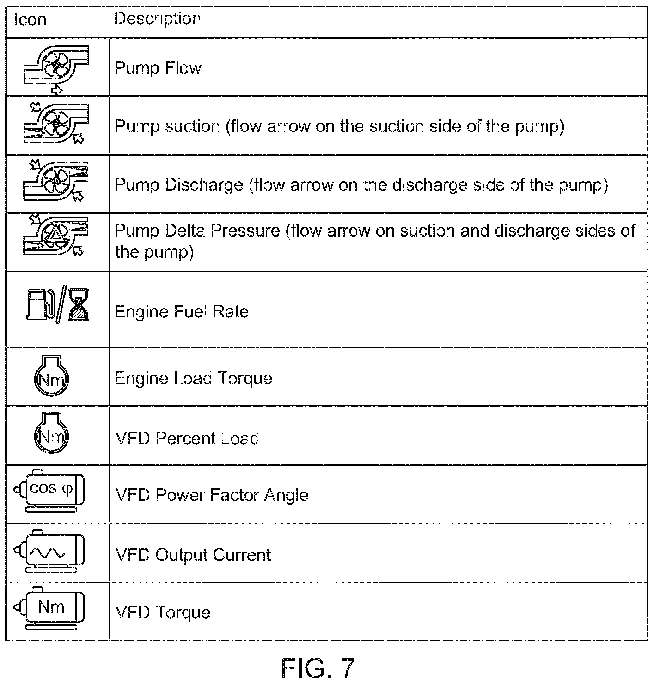

FIG. 7 is a table showing example icons that may be used with gauges of a control panel according to exemplary embodiments disclosed herein.

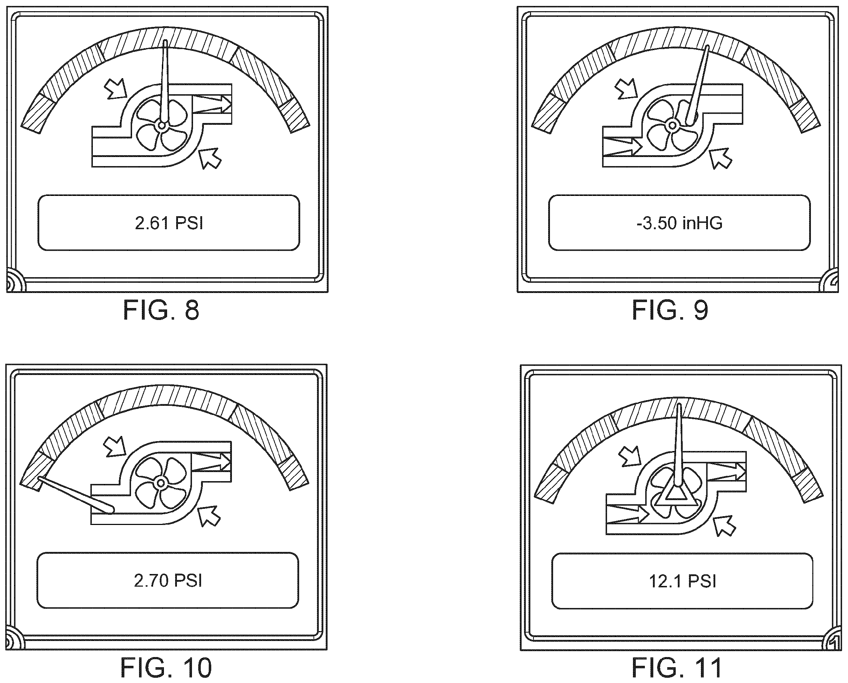

FIGS. 8, 9, 10, and 11 show icons that may be used with gauges of a control panel according to exemplary embodiments.

Corresponding reference numerals may indicate corresponding (though not necessarily identical) parts throughout the several views of the drawings.

### DETAILED DESCRIPTION

Example embodiments will now be described more fully with reference to the accompanying drawings.

Control panels are commonly used for controlling operation of engines, motors, and machines (broadly, system components). This includes using sensors for monitoring numerous parameters, such as oil pressure, water pressure, engine torque, engine fuel consumption, water flow, vibration, other engine/machine operating parameters, *etc.*

Many sensors have a wide sensing native range. For example, a pressure sensor may have a native range from vacuum to 300 pounds per square inch (psi). Or, for example, a flow sensor may have a native range from 15 gallons per minute (gpm) of flow to 2900 gpm of flow. Oftentimes, sensors have their native range narrowed to focus in on a certain range, such a pressure sensor range from 0 to 100 psi or a flow sensor range from 30 to 1000 gpm of flow.

As recognized herein, reducing or narrowing a sensor's native range to a more focused/more specific sensor range increases sensor resolution, which, in turn, can be advantageous. For example, higher sensor resolution may provide greater performance of a system with machine learning. But as further recognized herein, many sensors are not field configurable. And even if a sensor is field configurable, the user may not even know how to reconfigure the sensor yet alone know the specific range to which the sensor should be reconfigured. Additionally, many pressure sensors and other sensors can only be configured one time, which typically occurs at the time of manufacturing the sensors.

After recognizing the above, exemplary embodiments were developed and/or disclosed herein of controllers with auto-adjustable in-field reconfigurable sensors, systems including the same, and methods of automatically adjusting/reconfiguring sensors in the field to have narrower more focused sensor ranges, thereby increasing sensor resolution. As disclosed herein, exemplary embodiments are configured to be operable for performing an automated process (*e.g.,* not a conventional manual process, without manual human intervention, *etc.*) for focused sensor ranges.

In exemplary embodiments, a controller (*e.g*., control panel., *etc.*) is configured to be operable for automatically determining (*e.g*., without manual human intervention, *etc.*) what specific/narrower sensor range(s) is desired or needed, such as a pressure range for an auto-adjustable in-field reconfigurable pressure sensor, a flow range for an auto-adjustable in-field reconfigurable flow sensor, a torque range for an auto-adjustable in-field reconfigurable torque sensor, and/or a power consumption range for an auto-adjustable in-field reconfigurable power consumption sensor, *etc.* After automatically determining the desired or actual operating range(s) required for the particular system setup and application, the controller automatically adjusts/reconfigures the sensor(s) in the field (*e.g*., without manual human intervention, *etc.*) to thereby set the sensor(s) to the desired narrower sensor range(s), thereby increasing sensor resolution.

The higher sensor resolution achieved via the automated sensor setup may result in greater performance of a system with machine learning. And currently pressure sensors must be stocked, and the pump outfitted with the right-sized sensor. This results in more stocking of stock keeping units (SKUs) and labor to change out the sensors. Advantageously, exemplary embodiments disclosed herein would allow a single/same type of auto-adjustable in-field reconfigurable sensor to be installed at different locations (*e.g.,* suction, discharge, *etc.*)*.* The sensors would then be automatically adjusted/reconfigured by the system to their appropriate operating sensor ranges depending on the different locations at which the sensors are installed.

The following example is provided for purposes of illustrating how higher sensor resolution may results in greater performance of a system with machine learning. In this example, there is a pressure sensor with native range of -14.7 to 200 pounds per square inch (PSI) that is installed on the suction side of the pump. The pressure sensor outputs a signal that ranges from 4 milliamps (mA) to 20mA, with 4mA representing a pressure of -14.7 PSI and 20mA representing 200mA. The pressure range is 200 + 14.7 = 214.7 PSI, and the signal range is 20 mA - 4 mA =16 mA. Each mA represents 214.7/16 = 13.42 PSI per mA. Because the sensor is on the suction side of the pump where there will be no positive pressure, the effective range of the sensor is 4mA (-14.7psi) to 5.1mA (0 PSI). The calculation to determine the mA signal for 0 PSI is 14.7/13.42 = 1.1mA. Adding 1.1mA to 4mA = 5.1mA. This process is repeated for a sensor that has a focus range of -14.7 to 0 PSI. Now, each mA represents 0.92 PSI per mA. The full focus range is used resulting in a much higher resolution so that machine learning can see smaller changes in the suction with a lot more precision.

By way of example only, a controller may automatically adjust/reconfigure an auto-adjustable in-field reconfigurable pressure sensor (*e.g.,* BLUETOOTH pressure sensor, *etc.*) from a first pressure range (*e.g.,* native range, *etc.*) from vacuum to 300 pounds per square inch (PS) to a second narrower pressure range from 0 to 100 psi, thereby increasing resolution of the pressure sensor. By way of further example only, the controller may automatically adjust/reconfigure an auto-adjustable in-field reconfigurable flow sensor (*e.g*., ModBus flow sensor, *etc*.) from a first flow rate range (*e.g.,* native range, *etc*.) of 15 gallons per minute (gpm) to 2900 gpm of flow to a second narrower flow rate range 30 to 1000 gpm of flow, thereby increasing resolution of the flow sensor.

In an exemplary embodiment, a system includes a control panel (broadly, a controller), a BLUETOOTH pressure sensor (broadly, a first sensor) having a native range of vacuum to 300 psi, and a ModBus flow sensor (broadly, a second sensor) having a native range of 15 to 2900 gpm. The pressure and flow sensors may be operatively connected or fluidically coupled with (*e.g.,* plumbed up, *etc.*) to a pump that is operable for pumping water to a destination. After the system is initially setup, the control panel is operable for sweeping or cycling the pump thru its entire operating range while analyzing pressures and flows to determine minimum and maximum pressure and flow values for the respective pressure and flow sensors. After the control panel has determined minimum and maximum pressure and flow values, the control panel is operable for automatically reconfiguring/adjusting the sensors to proper ranges based on the minimum and maximum pressure and flow values, which may also include +/- tolerances. More specifically, the control panel may automatically reconfigure/adjust the BLUETOOTH pressure sensor, via BLUETOOTH communications without manual human input, to the determined minimum and maximum pressure values +/- tolerances. The control panel may also automatically reconfigure/adjust the ModBus flow sensor, via ModBus data communications protocol without manual human input, to the determined minimum and maximum flow values +/- tolerances. The BLUETOOTH and ModBus communications mentioned above are examples only as other exemplary embodiments may be configured such that the control panel (broadly, controller) communicates with sensor(s) via one or more other communication protocol(s) and/or via one or more other forms of digital communication in addition to or besides BLUETOOTH and/or ModBus communication protocols.

After the sensor reconfiguration is complete and the sensors are operational with the more focused higher resolution sensor ranges, the control panel may be configured to initiate and execute a learning mode in exemplary embodiments. For example, the control panel may be configured to be operable for initiating and executing a machine learning process (with the sensors using their more focused higher resolution sensor ranges) that is similar to or substantially identical to a machine learning process as disclosed in published U.S. Patent Application US2024/0019816, which is incorporated herein by reference in its entirety.

With reference to the figures, FIG. 1 illustrates an exemplary embodiment of a system 100 that includes a controller 104 embodying one or more aspects of the present disclosure. The controller 104 is configured to be operable for controlling an engine 108 (*e.g.,* diesel engine, *etc.*)*,* which, in turn, is operable for driving (*e.g.,* mechanically spinning, *etc.*) a pump 112.

The controller 104 is in communication with one or more auto-adjustable in-field reconfigurable sensors 116 (*e.g.,* flow sensor(s), suction and/or discharge pressure sensors, tank level sensor(s) at source tank(s) and/or output tank(s), *etc.*)*.* FIG. 1 shows the sensors 116 remotely spaced apart from the engine 108 and the pump 112. But the system 100 may also include one or more sensor(s) that are a part of, integrated with, or built into the engine 108 and/or the pump 112, such as a built-in pressure sensor within the pump 112, *etc.*

In response to output from the sensors 116 communicated to the controller 104 (*e.g.,* via BLUETOOTH communication, ModBus data communications protocol, a hard wired connection, wireless connection, *etc.*), the controller 104 may control operation of the pump 112 by sending commands to the engine's electronic control unit (ECU) (*e.g.,* via a controller area network (CAN bus), *etc.*) for controllably changing the speed of the engine 108 that is driving the pump 112. The pump 112 may comprise an industrial diesel driven pump at a water source 120 (*e.g.,* lake, pond, river, reservoir, tank, other water source, *etc.*) that is operable for transferring water from the water source 120 to a second location 124.

The system 100 is configured to be operable for performing an automated process (*e.g.,* not a conventional manual process, without manual human intervention, *etc*.) during which the controller 104 automatically determines what specific/narrower sensor ranges are desired or needed for the sensors 116, such as a pressure range for an auto-adjustable in-field reconfigurable pressure sensor and/or a flow range for an auto-adjustable in-field reconfigurable flow sensor, *etc.* After automatically determining the desired or actual operating range(s) for sensor(s) 116 based on the particular system setup and application, the controller 104 automatically adjusts/reconfigures the sensor(s) 116 in the field to thereby set the sensor(s) 116 to the desired narrower sensor range(s), thereby increasing sensor resolution.

In an exemplary embodiment, the sensors 116 include an auto-adjustable in-field reconfigurable pressure sensor and an auto-adjustable in-field reconfigurable flow sensor. After the system 100 is initially setup, the controller 104 is operable for sweeping or cycling the pump 112 thru its entire operating range while analyzing pressures and flows to determine minimum and maximum pressure and flow values for respective pressure and flow sensors. After the controller 104 has determined the minimum and maximum pressure and flow values, the controller 104 is operable for automatically reconfiguring/adjusting the pressure and flow sensors to proper ranges based on the minimum and maximum pressure and flow values, which may also include +/- tolerances.

For example, the auto-adjustable in-field reconfigurable pressure sensor may be a BLUETOOTH pressure sensor, and the auto-adjustable in-field reconfigurable flow sensor may be a ModBus flow sensor. In this example, the controller 104 may automatically reconfigure/adjust the BLUETOOTH pressure sensor, via BLUETOOTH communications without manual human input, to the determined minimum and maximum pressure values +/tolerances. The controller 104 may also automatically reconfigure/adjust the ModBus flow sensor, via ModBus data communications protocol without manual human input, to the determined minimum and maximum flow values +/- tolerances. The BLUETOOTH and ModBus communications mentioned above are examples only as other exemplary embodiments may be configured such that the controller communicates with sensor(s) via one or more other communication protocol(s) and/or via one or more other forms of digital communication in addition to or besides BLUETOOTH and/or ModBus communication protocols.

With continued reference to the exemplary embodiment shown in FIG. 1, the controller 104 may be configured to include or execute a machine learning process while the sensor(s) 116 are using more focused higher resolution sensor range(s). During the machine learning process, the controller 104 (in conjunction with the auto-adjustable in-field reconfigurable flow sensor operating with the more focused higher resolution flow range) learns (*e.g*., algorithmically learns via artificial intelligence (AI) machine learning algorithm(s), *etc.*) normal flow levels based on or corresponding with acceptable range(s) (*e.g*., user-selected configurable positive/negative (+/-) percentage error threshold(s), *etc.*) across a full RPM operational range of the engine 108. The normal flow levels established via the machine learning process enable the controller 104 to detect a problem(s) regardless of the RPM at which the engine 108 is operating. With the machine learning, the controller 104 is operable (in conjunction with the auto-adjustable in-field reconfigurable flow sensor operating with the more focused higher resolution flow range) for learning the normal flow at any given RPM of the engine.

The controller 104 is operable for monitoring the flow level via the auto-adjustable in-field reconfigurable flow sensor operating with the more focused higher resolution flow range. The controller 104 is also operable for comparing the monitored flow level with the learned normal flow level at the given engine RPM to determine if the monitored flow level is within its acceptable range (*e.g*., within the user-selected positive/negative (+/-) percentage error threshold at the specific RPM, *etc.*) or outside its acceptable range (*e.g.,* deviated more than the user-selected positive/negative (+/-) percentage error threshold at the specific RPM, *etc.*)*.* If it is determined that the monitored flow level is outside its acceptable range (*e.g*., deviated more than the user-selected positive/negative (+/-) percentage error threshold at the specific RPM, *etc.*)*,* the controller 104 may then issue a warning (*e.g*., a warning alarm, a shutdown alarm, display or present an error message, *etc*.) and/or initiate a shutdown. Accordingly, the controller 104 may thus be operable for detecting issues or problems associated with the flow levels at any given RPM of the engine 108, such as detection of a clogged input due to debris based on less than expected flow at a given RPM of the engine 108, a partially or completely obstructed output (*e.g.,* a truck parked on the output hose, *etc*.) based on less than expected flow at a given RPM of the engine 108, a busted output hose based on more than expected flow at a given RPM of the engine 108, *etc.*

FIG. 2 illustrates an exemplary embodiment of a system 200 including a controller 204 embodying one or more aspects of the present disclosure. The controller 204 is configured to be operable for controlling a variable frequency drive (VFD) 232, *e.g.,* via ModBus data communications protocol, *etc.* In turn, the VFD 232 enables speed control of a three-phase AC motor 236 (broadly, a motor) that drives (*e.g.,* mechanically spins, *etc.*) a pump 240. The VFD 232 is operable for manipulating the frequency of the output by rectifying an incoming AC current into DC, and then using voltage pulse-width modulation (PWM) to recreate an AC current and voltage output waveform.

A communication link (*e.g.,* hard wired connection, wireless connection, *etc.*) is provided from the controller 204 to the VFD 232. For example, a single cable or other suitable communication link may be provided from the controller 204 to the VFD 232.

The controller 204 is in communication with one or more auto-adjustable in-field reconfigurable sensors 244 (*e.g.,* flow sensor(s), suction and/or discharge pressure sensors, tank level sensor(s) at source tank(s) and/or output tank(s), *etc.*)*.* FIG. 2 shows the sensors 244 remotely spaced apart from the motor 236 and the pump 240. But the system 200 may also include one or more sensor(s) that are a part of, integrated with, or built into the motor 236 and/or the pump 240, such as a built-in pressure sensor within the pump 240, *etc.*

In response to output from the sensors 244 communicated to the controller 204 (*e.g.,* via BLUETOOTH communication, ModBus data communications protocol, a hard wired connection, wireless connection, *etc.*)*,* the controller 204 is configured to be operable controlling the VFD 232, *e.g.,* to start, vary the RPMs (revolutions per minute), and stop the motor 236 based on the configured behavior, *etc.*

The system 200 is configured to be operable for performing an automated process (*e.g.,* not a conventional manual process, without manual human intervention, *etc.*) during which the controller 204 automatically determines what specific/narrower sensor ranges are desired or needed for the sensors 244, such as a pressure range for an auto-adjustable in-field reconfigurable pressure sensor, a flow range for an auto-adjustable in-field reconfigurable flow sensor, a torque range for an auto-adjustable in-field reconfigurable torque sensor, a power consumption range for an auto-adjustable in-field power consumption sensor, *etc.* After automatically determining the desired or actual operating range(s) for sensor(s) 244 based on the particular system setup and application, the controller 204 automatically adjusts/reconfigures the sensor(s) 244 in the field to thereby set the sensor(s) 244 to the desired narrower sensor range(s), thereby increasing sensor resolution.

In an exemplary embodiment, the sensors 244 include an auto-adjustable in-field reconfigurable pressure sensor and an auto-adjustable in-field reconfigurable flow sensor. After the system 200 is initially setup, the controller 204 is operable for sweeping or cycling the pump 240 thru its entire operating range while analyzing pressures and flows to determine minimum and maximum pressure and flow values for respective pressure and flow sensors. After the controller 204 has determined the minimum and maximum pressure and flow values, the controller 204 is operable for automatically reconfiguring/adjusting the pressure and flow sensors to proper ranges based on the minimum and maximum pressure and flow values, which may also include +/- tolerances.

For example, the auto-adjustable in-field reconfigurable pressure sensor may be a BLUETOOTH pressure sensor, and the auto-adjustable in-field reconfigurable flow sensor may be a ModBus flow sensor. In this example, the controller 204 may automatically reconfigure/adjust the BLUETOOTH pressure sensor, via BLUETOOTH communications without manual human input, to the determined minimum and maximum pressure values +/tolerances. The controller 204 may also automatically reconfigure/adjust the ModBus flow sensor, via ModBus data communications protocol without manual human input, to the determined minimum and maximum flow values +/- tolerances. The BLUETOOTH and ModBus communications mentioned above are examples only as other exemplary embodiments may be configured such that the controller communicates with sensor(s) via one or more other communication protocol(s) and/or via one or more other forms of digital communication in addition to or besides BLUETOOTH and/or ModBus communication protocols.

The sensors 244 may include an auto-adjustable in-field reconfigurable torque sensor. In which case, the controller 204 may be operable for sweeping or cycling the motor 236 across its full RPM operational range while analyzing torque to determine minimum and maximum torque values for the torque sensor. After the controller 204 has determined the minimum and maximum torque values, the controller 204 is operable for automatically reconfiguring/adjusting the torque sensor to proper ranges based on the minimum and maximum torque values, which may also include +/- tolerances.

The sensors 244 may include an auto-adjustable in-field power consumption sensor. In which case, the controller 204 may be operable for sweeping or cycling the motor 236 across its full RPM operational range while analyzing power consumption to determine minimum and maximum power consumption values. After the controller 204 has determined the minimum and maximum power consumption values, the controller 204 is operable for automatically reconfiguring/adjusting the power consumption sensor to proper ranges based on the minimum and maximum power consumption values, which may also include +/- tolerances.

With continued reference to the exemplary embodiment shown in FIG. 2, the controller 204 is configured to include or execute a machine learning process while the sensor(s) 244 are using more focused higher resolution sensor range(s). During the machine learning process, the controller 204 learns (*e.g*., algorithmically learns via artificial intelligence (AI) machine learning algorithm(s), *etc.*) normal power consumption and torque levels based on or corresponding with acceptable range(s) (*e.g.*, user-selected configurable positive/negative (+/-) percentage error thresholds, *etc.*) across a full RPM operational range of the motor 236. The normal power consumption and torque levels established via the machine learning process enable the controller 204 to detect a problem(s) regardless of the RPM at which the motor 236 is operating.

The controller 204 is operable for comparing the monitored normal power consumption and torque levels with the learned normal power consumption and torque levels at the given motor RPM to determine if the monitored normal power consumption and torque levels are within the acceptable range (*e.g.*, within the user-selected positive/negative (+/-) percentage error threshold at the specific RPM, *etc*.) or outside the acceptable range (*e.g.,* deviated more than the user-selected positive/negative (+/-) percentage error threshold at the specific RPM, *etc*.)*.* If it is determined that the monitored normal power consumption and torque levels is outside the acceptable range, the controller 204 may then issue a warning, alert, fault (*e.g.,* a warning alarm, a shutdown alarm, display or present an error message, *etc.*) and/or initiate a shutdown. Accordingly, the controller 204 may thus be operable for detecting issues or problems associated with the power consumption and torque levels at any given RPM of the motor 236, such as detection of motor damage or failure based on less than or more than expected power and/or torque at a given RPM of the motor 236, detection of pump damage or failure based on less than or more than expected power and/or torque at a given RPM of the motor 236, detection of a clogged input of the pump 240 due to debris based on less than or more than expected power and/or torque at a given RPM of the motor 236, *etc.*

FIG. 3 illustrates an exemplary embodiment of a system 300 including first and second controllers 304A and 304B embodying one or more aspects of the present disclosure. The first and second controllers 304A and 304B and other system components shown in FIG. 3 may be identical or substantially similar to the respective controller 104 (FIG. 1) and controller 204 (FIG. 2) and corresponding system components described above.

For example, and similar to the controller 104 (FIG. 1), the first controller 304A is configured to be operable for controlling an engine 308 (*e.g.,* diesel engine, *etc.*), which, in turn, is operable for driving (*e.g.,* mechanically spinning, *etc.*) a first pump 312. The first controller 304A is in communication with one or more auto-adjustable in-field reconfigurable sensors 316 (*e.g*., flow sensor(s), suction and/or discharge pressure sensors, tank level sensor(s) at source tank(s) and/or output tank(s), *etc.*)*.* In response to output from the sensors 316 communicated to the first controller 304A (*e.g.,* via BLUETOOTH communication, ModBus data communications protocol, a hard wired connection, wireless connection, *etc.*)*,* the first controller 304A may control operation of the first pump 312 by sending commands to the engine's electronic control unit (ECU) (*e.g.,* via a controller area network (CAN bus), *etc.*) for controllably changing the speed of the engine 308 that is driving the first pump 312.

The system 300 is configured to be operable for performing an automated process (*e.g.,* not a conventional manual process, without manual human intervention, *etc.*) during which the first controller 304A automatically determines what specific/narrower sensor ranges are desired or needed for the sensors 316, such as a pressure range for an auto-adjustable in-field reconfigurable pressure sensor, a flow range for an auto-adjustable in-field reconfigurable flow sensor, a torque range for an auto-adjustable in-field reconfigurable torque sensor, a power consumption range for an auto-adjustable in-field reconfigurable power consumption sensor, *etc.* After automatically determining the desired or actual operating range(s) for sensor(s) 316 based on the particular system setup and application, the first controller 304A automatically adjusts/reconfigures the sensor(s) 316 in the field to thereby set the sensor(s) 316 to the desired narrower sensor range(s), thereby increasing sensor resolution.

In an exemplary embodiment, the sensors 316 include an auto-adjustable in-field reconfigurable pressure sensor and an auto-adjustable in-field reconfigurable flow sensor. And after the system 300 is initially setup, the first controller 304A is operable for sweeping or cycling the pump 312 thru its entire operating range and analyzing pressures and flows to thereby determine minimum and maximum pressure and flow values for respective pressure and flow sensors. After the first controller 304A has determined the minimum and maximum pressure and flow values, the first controller 304A is operable for automatically reconfiguring/adjusting the pressure and flow sensors to proper ranges based on the minimum and maximum pressure and flow values, which may also include +/- tolerances.

With continued reference to the exemplary embodiment shown in FIG. 3, the first controller 304A may be configured to include or execute a machine learning process while the sensor(s) 316 are using more focused higher resolution sensor range(s). During the machine learning process, the first controller 304A (in conjunction with the auto-adjustable in-field reconfigurable flow sensor operating with the more focused higher resolution flow range) learns (*e.g.,* algorithmically learns via artificial intelligence (AI) machine learning algorithm(s), *etc.*) normal flow levels based on or corresponding with acceptable range(s) (*e.g*., user-selected configurable positive/negative (+/-) percentage error threshold(s), *etc*.) across a full RPM operational range of the engine 308. The normal flow levels established via the machine learning process enable the first controller 304A to detect a problem(s) regardless of the RPM at which the engine 308 is operating. With the machine learning, the first controller 304A is operable (in conjunction with the auto-adjustable in-field reconfigurable flow sensor operating with the more focused higher resolution flow range) for learning the normal flow at any given RPM of the engine.

The first controller 304A is operable for monitoring the flow level via the auto-adjustable in-field reconfigurable flow sensor operating with the more focused higher resolution flow range. The first controller 304A is also operable for comparing the monitored flow level with the learned normal flow level at the given engine RPM to determine if the monitored flow level is within its acceptable range (*e.g*., within the user-selected positive/negative (+/-) percentage error threshold at the specific RPM, *etc.*) or outside its acceptable range (*e.g.,* deviated more than the user-selected positive/negative (+/-) percentage error threshold at the specific RPM, *etc.*). If it is determined that the monitored flow level is outside its acceptable range (*e.g*., deviated more than the user-selected positive/negative (+/-) percentage error threshold at the specific RPM, *etc.*), the first controller 304A may then issue a warning (*e.g*., a warning alarm, a shutdown alarm, display or present an error message, *etc.*) and/or initiate a shutdown. Accordingly, the first controller 304A may thus be operable for detecting issues or problems associated with the flow levels at any given RPM of the engine 308, such as detection of a clogged input due to debris based on less than expected flow at a given RPM of the engine 308, a partially or completely obstructed output (*e.g.,* a truck parked on the output hose, *etc*.) based on less than expected flow at a given RPM of the engine 308, a busted output hose based on more than expected flow at a given RPM of the engine 308, *etc*.

Similar to the controller 204 (FIG. 2), the second controller 304B is configured to be operable for controlling a variable frequency drive (VFD) 332, which enables speed control of a three-phase AC motor 336 (broadly, a motor) that drives (*e.g.,* mechanically spins, *etc*.) a second pump 340. The second controller 304B is in communication with one or more auto-adjustable in-field reconfigurable sensors 344 (*e.g.,* flow sensor(s), suction and/or discharge pressure sensors, tank level sensor(s) at source tank(s) and/or output tank(s), *etc.*)*.* In response to output from the sensors 344 communicated to the second controller 304B (*e.g.,* via BLUETOOTH communication, ModBus data communications protocol, a hard wired connection, wireless connection, *etc.*), the second controller 304B is configured to be operable controlling the VFD 332, *e.g.,* to start, vary the RPMs (revolutions per minute), and stop the motor 336 based on the configured behavior, *etc.*

The system 300 is configured to be operable for performing an automated process (*e.g.,* not a conventional manual process, without manual human intervention, *etc.*) during which the second controller 304B automatically determines what specific/narrower sensor ranges are desired or needed for the sensors 344, such as a pressure range for an auto-adjustable in-field reconfigurable pressure sensor, a flow range for an auto-adjustable in-field reconfigurable flow sensor, a torque range for an auto-adjustable in-field reconfigurable torque sensor, a power consumption range for an auto-adjustable in-field reconfigurable power consumption sensor, *etc.* After automatically determining the desired or actual operating range(s) for sensor(s) 344 based on the particular system setup and application, the second controller 304B automatically adjusts/reconfigures the sensor(s) 344 in the field to thereby set the sensor(s) 344 to the desired narrower sensor range(s), thereby increasing sensor resolution.

In an exemplary embodiment, the sensors 344 include an auto-adjustable in-field reconfigurable pressure sensor and an auto-adjustable in-field reconfigurable flow sensor. After the system 300 is initially setup, the second controller 304B is operable for sweeping or cycling the pump 340 thru its entire operating range while analyzing pressures and flows to determine minimum and maximum pressure and flow values for respective pressure and flow sensors. After the second controller 304B has determined the minimum and maximum pressure and flow values, the second controller 304B is operable for automatically reconfiguring/adjusting the pressure and flow sensors to proper ranges based on the minimum and maximum pressure and flow values, which may also include +/- tolerances.

The sensors 344 may include an auto-adjustable in-field reconfigurable torque sensor. In which case, the second controller 304B may be operable for sweeping or cycling the motor 336 across its full RPM operational range while analyzing torque to determine minimum and maximum torque values for the torque sensor. After the second controller 304B has determined the minimum and maximum torque values, the second controller 304B is operable for automatically reconfiguring/adjusting the torque sensor to proper ranges based on the minimum and maximum torque values, which may also include +/- tolerances.

The sensors 344 may include an auto-adjustable in-field power consumption sensor. In which case, the second controller 304B may be operable for sweeping or cycling the motor 336 across its full RPM operational range while analyzing power consumption to determine minimum and maximum power consumption values. After the second controller 304B has determined the minimum and maximum power consumption values, the second controller 304B is operable for automatically reconfiguring/adjusting the power consumption sensor to proper ranges based on the minimum and maximum power consumption values, which may also include +/tolerances.

With continued reference to the exemplary embodiment shown in FIG. 3, the second controller 304B is configured to include or execute a machine learning process while the sensor(s) 344 are using more focused higher resolution sensor range(s). During the machine learning process, the second controller 304B learns (*e.g*., algorithmically learns via artificial intelligence (AI) machine learning algorithm(s), *etc*.) normal power consumption and torque levels based on or corresponding with acceptable range(s) (*e.g*., user-selected configurable positive/negative (+/-) percentage error thresholds, *etc*.) across a full RPM operational range of the motor 336.

The second controller 304B is operable for comparing the monitored normal power consumption and torque levels with the learned normal power consumption and torque levels at the given motor RPM to determine if the monitored normal power consumption and torque levels are within the acceptable range (*e.g*., within the user-selected positive/negative (+/-) percentage error threshold at the specific RPM, *etc.*) or outside the acceptable range (*e.g.,* deviated more than the user-selected positive/negative (+/-) percentage error threshold at the specific RPM, *etc*.)*.* If it is determined that the monitored normal power consumption and torque levels is outside the acceptable range, the second controller 304B may then issue a warning, alert, fault (*e.g.,* a warning alarm, a shutdown alarm, display or present an error message, *etc.*) and/or initiate a shutdown. Accordingly, the second controller 304B may thus be operable for detecting issues or problems associated with the power consumption and torque levels of the motor 336 at any given RPM of the motor 336, such as detection of motor damage or failure based on less than or more than expected power and/or torque at a given RPM of the motor 336, detection of damage to or failure of the second pump 340 based on less than or more than expected power and/or torque at a given RPM of the motor 336, detection of a clogged input of the second pump 340 due to debris based on less than or more than expected power and/or torque at a given RPM of the motor 336, *etc.*

FIG. 3 shows the sensors 316 remotely spaced apart from the engine 308 and the first pump 312. But the system 300 may also include one or more sensor(s) that are a part of, integrated with, or built into the engine 308 and/or the first pump 312, such as a built-in pressure sensor within the first pump 312, *etc.* FIG. 3 also shows the sensors 344 remotely spaced apart from the motor 336 and the second pump 340. Again, however, the system 300 may also include one or more sensor(s) that are a part of, integrated with, or built into the motor 336 and/or the second pump 340, such as a built-in pressure sensor within the second pump 340, *etc.*

FIG. 4 illustrates an exemplary embodiment of a system 400 including a controller 404 embodying one or more aspects of the present disclosure. The controller 404 is configured to be operable for controlling a variable frequency drive (VFD) 432 and an engine 408, *e.g.,* in response to or based on the controller's own communications and received sensor output from one or more auto-adjustable in-field reconfigurable sensors 416 (*e.g.,* flow sensor(s), suction and/or discharge pressure sensors, tank level sensor(s) at source tank(s) and/or output tank(s), *etc.*) in communication with the controller 404, *etc.*

The controller 404 is configured for controlling operation of the VFD 432 itself, *e.g.,* via ModBus data communications protocol, *etc.* In turn, the VFD 432 enables speed control of a three-phase AC motor 436 (broadly, a motor) that drives (*e.g.,* mechanically spins, *etc*.) a second pump 440. The VFD 432 is operable for manipulating the frequency of the output by rectifying an incoming AC current into DC, and then using voltage pulse-width modulation (PWM) to recreate an AC current and voltage output waveform.

A communication link (*e.g.,* hard wired connection, wireless connection, *etc*.) is provided from the controller 404 to the VFD 432. For example, a single cable or other suitable communication link may be provided from the controller 404 to the VFD 432.

The controller 404 is in communication with one or more auto-adjustable in-field reconfigurable sensors 416. In response to output from the sensors 416 communicated to the controller 404 (*e.g.,* via BLUETOOTH communication, ModBus data communications protocol, a hard wired connection, wireless connection, *etc.*), the controller 404 is configured to be operable controlling the VFD 432, *e.g.,* to start, vary the RPMs (revolutions per minute), and stop the motor 436 based on the configured behavior, *etc.*

The same single controller 404 is also configured for controlling operation of the diesel engine 408 (broadly, an engine) that drives (*e.g.,* mechanically spins, *etc.*) a first pump 412. For example, the controller 404 may send commands to the diesel engine's electronic control unit (ECU) via a controller area network (CAN bus).

The system 400 is configured to be operable for performing an automated process (*e.g.,* not a conventional manual process, without manual human intervention, *etc.*) during which the controller 404 automatically determines what specific/narrower sensor ranges are desired or needed for the sensors 416, such as a pressure range for an auto-adjustable in-field reconfigurable pressure sensor, a flow range for an auto-adjustable in-field reconfigurable flow sensor, a torque range for an auto-adjustable in-field reconfigurable torque sensor, and/or a power consumption range for an auto-adjustable in-field reconfigurable power consumption sensor, *etc.* After automatically determining the desired or actual operating range(s) for sensor(s) 416 based on the particular system setup and application, the controller 404 automatically adjusts/reconfigures the sensor(s) 416 in the field to thereby set the sensor(s) 416 to the desired narrower sensor range(s), thereby increasing sensor resolution.

In an exemplary embodiment, the sensors 416 include an auto-adjustable in-field reconfigurable pressure sensor and an auto-adjustable in-field reconfigurable flow sensor. After the system 400 is initially setup, the controller 404 is operable for sweeping or cycling the pump 440 thru its entire operating range while analyzing pressures and flows to determine minimum and maximum pressure and flow values for respective pressure and flow sensors. After the controller 404 has determined the minimum and maximum pressure and flow values, the second controller 404 is operable for automatically reconfiguring/adjusting the pressure and flow sensors to proper ranges based on the minimum and maximum pressure and flow values, which may also include +/- tolerances.

The sensors 416 may include an auto-adjustable in-field reconfigurable torque sensor. In which case, the controller 404 may be operable for sweeping or cycling the motor 436 across its full RPM operational range while analyzing torque to determine minimum and maximum torque values for the torque sensor. After the controller 404 has determined the minimum and maximum torque values, the controller 404 is operable for automatically reconfiguring/adjusting the torque sensor to proper ranges based on the minimum and maximum torque values, which may also include +/- tolerances.

The sensors 416 may include an auto-adjustable in-field power consumption sensor. In which case, the controller 404 may be operable for sweeping or cycling the motor 436 across its full RPM operational range while analyzing power consumption to determine minimum and maximum power consumption values. After the controller 404 has determined the minimum and maximum power consumption values, the controller 404 is operable for automatically reconfiguring/adjusting the power consumption sensor to proper ranges based on the minimum and maximum power consumption values, which may also include +/- tolerances.

With continued reference to the exemplary embodiment shown in FIG. 4, the controller 404 may be configured to include or execute a machine learning process while the sensor(s) 416 are using more focused higher resolution sensor range(s). During the machine learning process, the controller 404 (in conjunction with the auto-adjustable in-field reconfigurable flow sensor operating with the more focused higher resolution flow range) learns (*e.g*., algorithmically learns via artificial intelligence (AI) machine learning algorithm(s), *etc.*) normal flow levels based on or corresponding with acceptable range(s) (*e.g*., user-selected configurable positive/negative (+/-) percentage error threshold(s), *etc.*) across a full RPM operational range of the engine 408. The normal flow levels established via the machine learning process enable the controller 404 to detect a problem(s) regardless of the RPM at which the engine 408 is operating. With the machine learning, the controller 404 is operable (in conjunction with the auto-adjustable in-field reconfigurable flow sensor operating with the more focused higher resolution flow range) for learning the normal flow at any given RPM of the engine.

The controller 404 is operable for monitoring the flow level via the auto-adjustable in-field reconfigurable flow sensor operating with the more focused higher resolution flow range. The controller 404 is also operable for comparing the monitored flow level with the learned normal flow level at the given engine RPM to determine if the monitored flow level is within its acceptable range (*e.g*., within the user-selected positive/negative (+/-) percentage error threshold at the specific RPM, *etc.*) or outside its acceptable range (*e.g.,* deviated more than the user-selected positive/negative (+/-) percentage error threshold at the specific RPM, *etc.*)*.* If it is determined that the monitored flow level is outside its acceptable range (*e.g*., deviated more than the user-selected positive/negative (+/-) percentage error threshold at the specific RPM, *etc.*), the controller 404 may then issue a warning (*e.g*., a warning alarm, a shutdown alarm, display or present an error message, *etc.*) and/or initiate a shutdown. Accordingly, the controller 404 may thus be operable for detecting issues or problems associated with the flow levels at any given RPM of the engine 408, such as detection of a clogged input due to debris based on less than expected flow at a given RPM of the engine 408, a partially or completely obstructed output (*e.g.,* a truck parked on the output hose, *etc.*) based on less than expected flow at a given RPM of the engine 408, a busted output hose based on more than expected flow at a given RPM of the engine 408, *etc.*

During the machine learning process, the controller 404 may also learn normal power consumption and torque levels of the motor 436 based on or corresponding with acceptable range(s) (*e.g.,* user-selected configurable positive/negative (+/-) percentage error thresholds, *etc.*) across a full RPM operational range of the motor 436. The controller 404 is operable for comparing the monitored normal power consumption and torque levels with the learned normal power consumption and torque levels at the given motor RPM to determine if the monitored normal power consumption and torque levels are within the acceptable range (*e.g*., within the user-selected positive/negative (+/-) percentage error threshold at the specific RPM, *etc.*) or outside the acceptable range (*e.g*., deviated more than the user-selected positive/negative (+/-) percentage error threshold at the specific RPM, *etc.*)*.* If it is determined that the monitored normal power consumption and torque levels is outside the acceptable range, the controller may then issue a warning, alert, fault (*e.g.,* a warning alarm, a shutdown alarm, display or present an error message, *etc.*) and/or initiate a shutdown. Accordingly, the controller 404 may thus be operable for detecting issues or problems associated with the power consumption and torque levels of the motor 436 at any given RPM of the motor 436, such as detection of damage to or failure of the motor 436 based on less than or more than expected power and/or torque at a given RPM of the motor 436, detection of damage to or failure of the second pump 440 based on less than or more than expected power and/or torque at a given RPM of the motor 436, detection of a clogged input of the second pump 440 due to debris based on less than or more than expected power and/or torque at a given RPM of the motor 436, *etc.*

FIG. 4 shows the sensors 416 remotely spaced apart from the engine 408, motor 436, and first and second pumps 412 and 440. But the system 400 may also include one or more sensor(s) that are a part of, integrated with, or built into the engine 408, motor 436, first pump 412, and/or second pump 440, such as a built-in pressure sensor within the first pump 412 and/or second pump 440, *etc.*

FIG. 5 illustrates a flowchart of an exemplary method in which a controller (*e.g*., controller 104 (FIG. 1), controller 204 (FIG. 2), controllers 304A and 304B (FIG. 3), controller 404 (FIG. 4), a CANplus^{™} CP1000 control panel 604 (FIG. 6), other control panel, *etc*.) automatically adjusts/reconfigures sensor(s) in the field to have narrower more focused sensor range(s), thereby increasing sensor resolution. The sensor(s) that are automatically adjusted/reconfigured in the field via the method 550 may comprise one or more of a pressure sensor, flow sensor, torque sensor, power sensor, combination thereof, *etc.*

As shown in FIG. 5, the method 550 begins at 552 at which the user configures the control panel (broadly, controller) for an RPM operating range. At 554, the control panel determines the RPM sampling points for creating an interpolated mapping of each sensor.

At 556, sampling begins and the method proceeds to the first RPM point at 558. At 560, the method includes waiting for the configured settling time before sampling for the configured sampling time 562.

At 564, the control panel makes a determination as to whether or not the most recent sample was the last RPM sampling point. If the control panel determines at 564 that the most recent sample was not at the last RPM sampling point, then the method proceeds to the next RPM sampling point at 566 and repeats steps 560, 562, and 564 for the next RPM sampling point. If the control panel determines at 564 that the most recent sample was the last RPM sampling point, then the method proceeds to 568 to start the focus range determination by the control panel for a first sensor at 570.

At 572, the control panel automatically determines the minimum measured valued for the sensor. At 574, the control panel applies a negative tolerance to the minimum measured value determined for the sensor at 572 to thereby establish the minimum for the narrower more focused sensor range.

At 576, the control panel automatically determines the maximum measured valued for the sensor. At 580, the control panel applies a positive tolerance to the maximum measured value determined for the sensor at 576 to thereby establish the maximum for the narrower more focused sensor range.

At 582, the control panel automatically reconfigures the sensor to have the narrower more focused sensor range defined by the minimum and maximum values respectively established at 574 and 580, thereby increasing sensor resolution.

At 584, the control panel makes a determination as to whether or not the most recently configured sensor was the last sensor to be reconfigured. If the control panel determines at 584 that the most recently configured sensor was not the last sensor to be reconfigured, then the method proceeds to the next sensor at 586 and repeats steps 572, 574, 576, 578, and 580 to reconfigure that next sensor. If the control panel determines at 584 that the most recently reconfigured sensor was the last sensor to be reconfigured, then the method ends.

In exemplary systems configured to be operable with multi-pump mode operation, the following exemplary methods may be employed depending on whether the system is operating in a lead-lag mode, synchronous mode, or parallel mode.

The lead-lag pump operational mode alternates the operating pump each time a start event occurs. For example, a 1^{st} Start Event occurs and Pump 1 starts and runs until the stop event occurs. A 2^{nd} Start Event occurs and Pump 2 starts and runs until the stop event occurs. A 3^{rd} Start Event occurs and Pump 3 starts and runs until the stop event occurs. A 4^{th} Start Event occurs and Pump 1 starts and runs until the stop event occurs. And this cycle continues for the lead-lag mode.

In the lead-lag mode, the minimum and maximum values (*e.g*., pressure and flow, *etc.*) are established for all the pumps that are in the rotation. This is because Pump 1 may be older, less efficient, and pump differently enough that hydraulic parameters are affected.

After the maximum and minimum values are known for each pump in the rotation, the sensors may be reconfigured once with the lowest minimum value and highest maximum value cross all the pumps. Alternatively, the sensors may be reconfigured each time a pump is started using that particular operating pump's minimum and maximum values, which would allow the highest precision as each pump runs.

The synchronous pump operational mode simultaneously runs all the pumps in parallel. Thus, only the minimum and maximum values are determined for the entire system.

For the parallel pump operational mode, the minimum value across all the pumps is determined because at any time a particular pump may be running by itself. After the minimum value is determined, the minimum value is determined via the alternate methods of one time reconfigure or specific reconfigure based on the pump running. The maximum value is the combination of all the pumps running and is thus easier to determine than the minimum value.

In exemplary embodiments, there may be multiple discharge sensors, such as a discharge sensor at each pump's discharge outlet before it is combined with one or more other pump outputs. There could be a discharge sensor at every junction of two or more pump outlets. There could also be a discharge sensor at or near the flow meter that is measuring the entire output. Each of these multiple discharge sensor could have its own narrower more focused sensor range, thereby allowing the machine learning to better monitor the entire set of pumps to detect issue with a pump that may have otherwise not been detected because of the combination of the other pumps.

In exemplary embodiments, a controller disclosed herein (*e.g*., controller 104 (FIG. 1), controller 204 (FIG. 2), controllers 304A and 304B (FIG. 3), controller 404 (FIG. 4), a CANplus^{™} CP1000 control panel 604 (FIG. 6), other controller or control panel, *etc*.) is configured to be operable for performing an automated process (*e.g*., not a conventional manual process, without manual human intervention, *etc.*) for automatically adjusting/reconfiguring sensors in the field to have narrower more focused sensor ranges, thereby increasing sensor resolution. In exemplary embodiments, the controller may also be configured with machine learning as disclosed in published U.S. Patent Application US2024/0019816, which is incorporated herein by reference in its entirety. In other exemplary embodiments, the controller is not configured to include or execute a machine learning process. Accordingly, some (but not all) exemplary embodiments include machine-learning controllers configured to be operable for automatically adjusting/reconfiguring sensors in the field as disclosed herein.

FIG. 7 is a table showing example icons that may be used with gauges on a control panel according to exemplary embodiments. The current machine learning status and values can be viewed on the gauges. The gauges are divided into five ranges. Green is the normal range. The gauge will show the parameter is as expected when its needle is pointing straight up (*e.g.,* FIGS. 7 and 10, *etc.*). The needle will deviate to left when the parameter is less than the normal. The needle will deviate to the right when the parameter is more than the normal (*e.g*., FIG. 9, *etc.*)*.* As the parameter deviates more and more from the normal, the needle will cross over into the yellow region. If the needle remains in the region for more than the configured Warning Enable Delay (default is 30 seconds), a Warning Alarm will occur if enabled. If the needle continues to deviate even more, the needle will swing into the red region (*e.g.,* FIG. 10, *etc.*)*.* If it remains in the red region for more than the configured Shutdown Enable Delay (default is 30 seconds), a Shutdown Alarm will occur if enabled.

FIGS. 7, 8, 9, and 10 show icons that may be used on the gauges of a control panel according to exemplary embodiments. More specifically, FIG. 8 shows pump discharge of 2.61 PSI with the needle pointing straight up indicating that the pump discharge parameter being monitored is as expected. FIG. 9 shows a pump suction of -3.50 inHg (inch of mercury) with the needle having deviated to the right indicating that the pump suction parameter being monitored is more than the normal. FIG. 10 shows pump discharge of 2.70 PSI with the needle in the red region indicating a large deviation from normal. FIG. 11 shows a pump delta pressure of 12.1 PSI with the needle pointing straight up indicating that the pump discharge parameter being monitored is as expected.

Exemplary embodiments may include a control panel having one or more features identical to or similar to a CANplus^{™} CP1000 control panel. For example, an exemplary embodiment may include a control panel that is a manual and autostart platform for electronically governed diesel or natural gas engines. The control panel may also or instead be configured to control mechanically governed diesel engines. The control panel may comprise a comprehensive engine control panel with 21 inputs (5 for engine control and 16 for autostart operations). The control panel may support electronically and mechanically governed engines for manual or autostart operations. The control panel may be used for pump control applications to measure floats, suction and vacuum pressure, discharge pressure, water level and water flow. The control panel may support variable frequency drives. The control panel may include embedded Bluetooth^{®} or LTE communications. The control panel may be configured to display graphical quad-gauge pages on a 4.3" diagonal WQVGA (480x272 pixels) liquid crystal display (LCD). The control panel may be configured to display SAE J1939 parameters reported by an ECU (Engine Control Unit), including, but not limited to the following: RPM, coolant temperature, oil pressure, engine hours, voltage, exhaust emissions system state and diagnostic codes. The backlit display of the control panel may be clearly readable in bright sunlight and total darkness and may be housed in a rugged IP66 rated housing. The control panel may include LEDs (*e.g.,* three LEDs, *etc.*) to indicate Faults and Warnings, Emission-Related Alerts and Autostart active. The control panel may include display keys (*e.g.,* five display keys, *etc.)* that are associated with a dynamic Display Key bar as well as control buttons (*e.g.,* eight control buttons, *etc.*)*.* The control panel may feature automatic start/stop control and start/stop modes using an Event Manager, which can start or stop based on any of the digital inputs, analog transducer inputs (*e.g*., six 4-20 mA analog transducer inputs, *etc.*)*,* a real time clock, or combinations of date/time and analog or digital inputs. With the use of a transducer, the control panel may have a "cruise control" feature that automatically throttles the engine to maintain a configurable level. The control panel may be configured to use any one of the transducer inputs for the maintain/cruise control feature, regardless of whether that input is also being used as a start or stop event. The description in this paragraph of possible features that may be included with a control panel is provided for purpose of illustration and example only. In alternative exemplary embodiments, the control panel is configured differently, *e.g*., without one or more the feature(s) described in this paragraph, with different features and/or additional features than the features described in this paragraph, *etc.*

The exemplary embodiments of the controllers disclosed herein (*e*.*g*., controller 104 (FIG. 1), controller 204 (FIG. 2), controllers 304A and 304B (FIG. 3), controller 404 (FIG. 4), *etc.*) may be used in various types of systems, including water supply systems, wastewater systems (*e.g.,* a sewer system bypass, sewer lift station, *etc.*), flood water management systems, industrial pumps, generators, woodchippers, *etc.* But the exemplary controllers disclosed herein may also be used in other systems and are not limited to use in any one particular type of system, motor, engine, or machine.

In exemplary embodiments, a controller is configured to be operable for controlling at least one system component,. The controller is further configured to be operable for: automatically determining a narrower sensor range for at least one sensor for sensing a parameter to be monitored for the at least one system component; and after automatically determining the narrower sensor range, automatically adjusting/reconfiguring the at least one sensor in the field such that the at least one sensor is operable with the narrower sensor range thereby increasing sensor resolution while sensing the parameter to be monitored for the at least one system component.

In exemplary embodiments, the at least one sensor has a first/native sensor range. And the controller is configured to be operable for: automatically determining a second sensor range for the at least one sensor that is narrower than the first/native sensor range; and after automatically determining the second sensor range, automatically adjusting/reconfiguring the at least one sensor in the field such that the at least one sensor is operable with the second sensor range thereby increasing sensor resolution while sensing the parameter to be monitored for the at least one system component.

In exemplary embodiments, the at least one sensor comprises a BLUETOOTH-enabled sensor. And the controller is configured to be operable for automatically adjusting/reconfiguring the BLUETOOTH-enabled sensor in the field via BLUETOOTH communications such that the BLUETOOTH-enabled sensor is operable with the narrower sensor range while sensing the parameter to be monitored for the at least one system component.

In exemplary embodiments, the at least one sensor comprises a ModBus-enabled sensor. And the controller is configured to be operable for automatically adjusting/reconfiguring the ModBus-enabled sensor in the field via ModBus data communications protocol such that the ModBus-enabled sensor is operable with the narrower sensor range while sensing the parameter to be monitored for the at least one system component.

In exemplary embodiments, the controller is configured to be operable for sweeping or cycling the at least one system component thru its entire operating range to determine minimum and maximum parameter values for the narrower sensor range. After determining the minimum and maximum values, the controller is configured to be operable for automatically adjusting/reconfiguring the at least one sensor in the field such that the at least one sensor is operable with the narrower sensor range as defined by the minimum and maximum values (which may also include +/- tolerances) while sensing the parameter to be monitored for the at least one system component.

In exemplary embodiments, the at least one sensor comprises a pressure sensor having a first/native pressure sensor range. And the controller is configured to be operable for automatically determining a second pressure sensor range for the pressure sensor that is narrower than the first/native pressure sensor range. After automatically determining the second pressure sensor range, the controller is configured to be operable for automatically adjusting/reconfiguring the pressure sensor in the field such that the pressure sensor is operable with the second pressure sensor range instead of the first/native pressure range. For example, the pressure sensor may comprise a BLUETOOTH-enabled pressure sensor. And the controller may be configured to be operable for automatically adjusting/reconfiguring the BLUETOOTH-enabled pressure sensor in the field via BLUETOOTH communications such that the BLUETOOTH-enabled pressure sensor is operable with the second pressure sensor range. The controller may be configured to be operable for sweeping or cycling a pump thru its entire operating range while analyzing pressures to determine minimum and maximum pressure values. And after determining the minimum and maximum pressure values, the controller may be configured to be operable for automatically adjusting/reconfiguring the pressure sensor in the field such that the pressure sensor is operable with the second pressure sensor range as defined by the minimum and maximum pressure values (which may also include +/- tolerances) while sensing pressure of the pump.

In exemplary embodiments, the at least one sensor comprises a flow sensor having a first/native flow sensor range. And the controller is configured to be operable for automatically determining a second flow sensor range for the flow sensor that is narrower than the first/native flow sensor range. After automatically determining the second flow sensor range, the controller is configured to be operable for automatically adjusting/reconfiguring the flow sensor in the field such that the flow sensor is operable with the second flow sensor range instead of the first/native sensor range. For example, the flow sensor may comprise a ModBus-enabled flow sensor. And the controller may be configured to be operable for automatically adjusting/reconfiguring the ModBus-enabled flow sensor in the field via ModBus data communications protocol such that the ModBus-enabled flow sensor is operable with the second flow sensor range. The controller may be configured to be operable for sweeping or cycling a pump thru its entire operating range while analyzing flow to determine minimum and maximum flow values. After determining the minimum and maximum flow values, the controller may be configured to be operable for automatically adjusting/reconfiguring the flow sensor in the field, such that the flow sensor is operable with the second flow sensor range as defined by the minimum and maximum flow values (which may also include +/- tolerances) while sensing flow of the pump.

In exemplary embodiments, the controller is configured to be operable for:
(a) determining RPM sampling points for creating an interpolated mapping of the at least one sensor;
(b) beginning sampling and proceeding to a first RPM point;
(c) waiting a configured settling time before sampling for a configured sampling time;
(d) determining whether or not a most recent sample was a last RPM sampling point;
(e) if it is determined that the most recent sample was not the last RPM sampling point, then proceeding to a next RPM sampling point and returning to (c);
(f) if it is determined that the most recent sample was the last RPM sampling point, then starting a focus range determination for the at least one sensor;
(g) determining a minimum measured valued for the at least one sensor;
(h) applying a negative tolerance to the minimum measured value determined for the at least one sensor to thereby establish a minimum value for the narrower sensor range;
(i) determing a maximum measured valued for the at least one sensor;
(j) applying a positive tolerance to the maximum measured value determined for the at least one sensor to thereby establish a maximum value for the narrower sensor range; and
(k) reconfiguring the at least one sensor to have the narrower sensor range defined by the minimum and maximum values, thereby increasing sensor resolution;
(l) determining whether the at least one sensor reconfigured to hvae the narrower sensor range is the last sensor; and
(m) if it is determined that the at least one sensor reconfigured to have the narrower sensor range is not the last sensor, moving to a next sensor and returning to (g) for the next sensor.

In exemplary embodiments, the at least one sensor comprises a torque sensor for a motor. The controller is operable for sweeping or cycling the motor across its full RPM operational range while analyzing torque to determine minimum and maximum torque values for the torque sensor. After determining the minimum and maximum torque values, the controller is operable for automatically reconfiguring/adjusting the torque sensor to torque range based on the minimum and maximum torque values (which may also include +/- tolerances) while sensing the torque of the motor.

In exemplary embodiments, the at least one sensor comprises a power consumption sensor for a motor. The controller is operable for sweeping or cycling the motor across its full RPM operational range while analyzing power consumption to determine minimum and maximum power consumption values for the power consumption sensor. After determining the minimum and maximum power consumption values, the controller is operable for automatically reconfiguring/adjusting the power consumption sensor to a power consumption range based on the minimum and maximum power consumption values (which may also include +/- tolerances) while sensing the power consumption by the motor.

In exemplary embodiments, the controller is further configured to be operable for initiating and executing a machine learning process while the at least one sensor is operable with the narrower sensor range for sensing the parameter to be monitored for the at least one system component. For example, the controller may be configured to be operable for learning, via machine learning, a normal level for the parameter to be monitored across a full operational range of the at least one system component while the at least one sensor is operable with the narrower sensor range for sensing the parameter to be monitored for the at least one system component. The controller may be configured to be operable for comparing the monitored parameter to the learned normal level for detecting an issue(s) or problem(s) associated with the monitored parameter within the full operational range of the system component. In such exemplary embodiments, the controller may be configured to: compare the monitored parameter to the learned normal level to determine whether the monitored parameter is within an acceptable range or error threshold; and generate an alert if the monitored parameter is determined to be outside the acceptable range or error threshold. Also, the controller may be configured to algorithmically learn, via an artificial intelligence (AI) machine learning algorithm, the normal level for the parameter to be monitored across the full operational range of the system component.

In exemplary embodiments, a system comprises a controller as disclosed herein, multiple pumps configured to be operable in a lead-lag pump operational mode that alternates the operating pump each time a start event occurs, and multiple sensors associated with the multiple pumps. The controller is configured to be operable for: automatically determining minimum and maximum parameter values for the narrower sensor range for all of the multiple pumps that are in the rotation; after automatically determining the minimum and maximum parameter values for the narrower sensor range for all of the multiple pumps that are in the rotation: automatically adjusting/reconfiguring all of the sensors in the field once with the lowest minimum parameter value and highest maximum parameter value for the narrower sensor range across all of the multiple pumps that are in the rotation; or automatically adjusting/reconfiguring the sensors in the field each time a pump is started using that particular operating pump's minimum and maximum parameter values for the narrower sensor range.

In exemplary embodiments, a system comprises a controller as disclosed herein, multiple pumps configured to be operable in a synchronous pump operational mode in which the multiple pumps simultaneously run in parallel, and multiple sensors associated with the multiple pumps. The controller is configured to be operable for: automatically determining minimum and maximum parameter values for the entire system; and after automatically determining the minimum and maximum parameter values for the entire system, automatically adjusting/reconfiguring all of the sensors in the field to have the narrower sensor range defined by the lowest minimum parameter value and highest maximum parameter value for the entire system.

In exemplary embodiments, a system comprises a controller as disclosed herein, multiple pumps configured to be operable in a parallel pump operational mode in which at any time a particular pump may be running by itself, and multiple sensors associated with the multiple pumps. The controller is configured to be operable for: automatically determining the minimum parameter value based on the particular pump running; automatically determining the maximum parameter value as the combination of all the pumps running; after automatically determining the minimum and maximum parameter values, automatically adjusting/reconfiguring the sensors in the field to have the narrower sensor range defined by the lowest minimum parameter value and highest maximum parameter value.

Also disclosed are exemplary methods comprising automatically determining, via a controller, a narrower sensor range for at least one sensor for sensing a parameter to be monitored for at least one system component; and after automatically determining the narrower sensor range, automatically adjusting/reconfiguring, via the controller, the at least one sensor in the field such that the at least one sensor is operable with the narrower sensor range thereby increasing sensor resolution while sensing the parameter to be monitored for the at least one system component.

In exemplary methods, the at least one sensor has a first/native sensor range. And the method includes: automatically determining, via the controller, a second sensor range for the at least one sensor that is narrower than the first/native sensor range; and after automatically determining the second sensor range, automatically adjusting/reconfiguring, via the controller, the at least one sensor in the field such that the at least one sensor is operable with the second sensor range thereby increasing sensor resolution while sensing the parameter to be monitored for the at least one system component.

In exemplary methods, the at least one sensor comprises a BLUETOOTH-enabled sensor. And the method includes automatically adjusting/reconfiguring the BLUETOOTH-enabled sensor in the field via BLUETOOTH communications between the controller and the BLUETOOTH-enabled sensor such that the BLUETOOTH-enabled sensor is operable with the narrower sensor range while sensing the parameter to be monitored for the at least one system component.

In exemplary methods, the at least one sensor comprises a ModBus-enabled sensor. And the method includes automatically adjusting/reconfiguring the ModBus-enabled sensor in the field via ModBus data communications between the controller and the ModBus-enable sensor such that the ModBus-enabled sensor is operable with the narrower sensor range while sensing the parameter to be monitored for the at least one system component.

In exemplary methods, the method includes: sweeping or cycling the at least one system component thru its entire operating range to determine minimum and maximum parameter values for the narrower sensor range; and after determining the minimum and maximum values, automatically adjusting/reconfiguring, via the controller, the at least one sensor in the field such that the at least one sensor is operable with the narrower sensor range as defined by the minimum and maximum values (which may also include +/- tolerances) while sensing the parameter to be monitored for the at least one system component.

In exemplary methods, the at least one sensor comprises a pressure sensor having a first/native pressure sensor range. And the method includes: automatically determining, via the controller, a second pressure sensor range for the pressure sensor that is narrower than the first/native pressure sensor range; and after automatically determining the second pressure sensor range, automatically adjusting/reconfiguring, via the controller, the pressure sensor in the field such that the pressure sensor is operable with the second pressure sensor range instead of the first/native pressure range. For example, the pressure sensor may comprise a BLUETOOTH-enabled pressure sensor. And the method may include automatically adjusting/reconfiguring the BLUETOOTH-enabled pressure sensor in the field via BLUETOOTH communications between the controller and the BLUETOOTH-enabled pressure sensor such that the BLUETOOTH-enabled pressure sensor is operable with the second pressure sensor range. The method may also include sweeping or cycling a pump thru its entire operating range while analyzing pressures to determine minimum and maximum pressure values; and after determining the minimum and maximum pressure values, automatically adjusting/reconfiguring, via the controller, the pressure sensor in the field such that the pressure sensor is operable with the second pressure sensor range as defined by the minimum and maximum pressure values (which may also include +/- tolerances) while sensing pressure of the pump.

In exemplary methods, the at least one sensor comprises a flow sensor having a first/native flow sensor range. And the method includes automatically determining, via the controller, a second flow sensor range for the flow sensor that is narrower than the first/native flow sensor range; and after automatically determining the second flow sensor range, automatically adjusting/reconfiguring, via the controller, the flow sensor in the field such that the flow sensor is operable with the second flow sensor range instead of the first/native sensor range. For example, the flow sensor may comprise a ModBus-enabled flow sensor. And the method may include automatically adjusting/reconfiguring the ModBus-enabled flow sensor in the field via ModBus data communications between the controller and the ModBus-enabled flow sensor such that the ModBus-enabled flow sensor is operable with the second flow sensor range. The method may also include sweeping or cycling a pump thru its entire operating range while analyzing flow to determine minimum and maximum flow values; and after determining the minimum and maximum flow values, automatically adjusting/reconfiguring, via the controller, the flow sensor in the field such that the flow sensor is operable with the second flow sensor range as defined by the minimum and maximum flow values (which may also include +/- tolerances) while sensing flow of the pump.

In exemplary methods, the method includes the controller initiating and executing a machine learning process while the at least one sensor is operable with the narrower sensor range for sensing the parameter to be monitored for the at least one system component. The method may include the controller learning, via machine learning, a normal level for the parameter to be monitored across a full operational range of the at least one system component while the at least one sensor is operable with the narrower sensor range for sensing the parameter to be monitored for the at least one system component, thereby enabling the controller to be operable for comparing the monitored parameter to the learned normal level for detecting an issue(s) or problem(s) associated with the monitored parameter within the full operational range of the system component. The method may further include comparing the monitored parameter to the learned normal level to determine whether the monitored parameter is within an acceptable range or error threshold; and generating an alert if the monitored parameter is determined to be outside the acceptable range or error threshold. The method may also include the controller algorithmically learning, via an artificial intelligence (AI) machine learning algorithm, the normal level for the parameter to be monitored across the full operational range of the system component.

In exemplary methods, the method includes:
(a) determining RPM sampling points for creating an interpolated mapping of the at least one sensor;
(b) beginning sampling and proceeding to a first RPM point;
(c) waiting a configured settling time before sampling for a configured sampling time;
(d) determining whether or not a most recent sample was a last RPM sampling point;
(e) if it is determined that the most recent sample was not the last RPM sampling point, then proceeding to a next RPM sampling point and returning to (c);
(f) if it is determined that the most recent sample was the last RPM sampling point, then starting a focus range determination for the at least one sensor;
(g) determining a minimum measured valued for the at least one sensor;
(h) applying a negative tolerance to the minimum measured value determined for the at least one sensor to thereby establish a minimum value for the narrower sensor range;
(i) determing a maximum measured valued for the at least one sensor;
(j) applying a positive tolerance to the maximum measured value determined for the at least one sensor to thereby establish a maximum value for the narrower sensor range;
(k) reconfiguring the at least one sensor to have the narrower sensor range defined by the minimum and maximum values, thereby increasing sensor resolution;
(l) determining whether the at least one sensor reconfigured to have the narrower sensor range is the last sensor; and
(m) if it is determined that the at least one sensor reconfigured to have the narrower sensor range is not the last sensor, moving to a next sensor and returning to (g) for the next sensor.

Also disclosed are non-transitory computer-readable storage media including executable instructions, that when executed by at least one processor, cause a controller to: automatically determine a narrower sensor range for at least one sensor for sensing a parameter to be monitored for at least one system component; and after automatically determining the narrower sensor range, automatically adjust/reconfigure the at least one sensor in the field such that the at least one sensor is operable with the narrower sensor range thereby increasing sensor resolution while sensing the parameter to be monitored for the at least one system component.

In exemplary embodiments, the executable instructions include executable instructions, that when executed by the at least one processor, cause the controller to: automatically determine a second sensor range for the at least one sensor that is narrower than a first/native sensor range of the at least one sensor; and after automatically determining the second sensor range, automatically adjust/reconfigure the at least one sensor in the field such that the at least one sensor is operable with the second sensor range thereby increasing sensor resolution while sensing the parameter to be monitored for the at least one system component.

In exemplary embodiments, the at least one sensor comprises a BLUETOOTH-enabled sensor. And the executable instructions include executable instructions, that when executed by the at least one processor, cause the controller to automatically adjust/reconfigure the BLUETOOTH-enabled sensor in the field via BLUETOOTH communications between the controller and the BLUETOOTH-enabled sensor such that the BLUETOOTH-enabled sensor is operable with the narrower sensor range while sensing the parameter to be monitored for the at least one system component.

In exemplary embodiments, the at least one sensor comprises a ModBus-enabled sensor. And the executable instructions include executable instructions, that when executed by the at least one processor, cause the controller to automatically adjust/reconfigure the ModBus-enabled sensor in the field via ModBus data communications between the controller and the ModBus-enable sensor such that the ModBus-enabled sensor is operable with the narrower sensor range while sensing the parameter to be monitored for the at least one system component.

In exemplary embodiments, the executable instructions include executable instructions, that when executed by the at least one processor, cause the controller to: sweep or cycle the at least one system component thru its entire operating range to determine minimum and maximum parameter values for the narrower sensor range; and after determining the minimum and maximum values, automatically adjust/reconfigure the at least one sensor in the field such that the at least one sensor is operable with the narrower sensor range as defined by the minimum and maximum values (which may also include +/- tolerances) while sensing the parameter to be monitored for the at least one system component.

In exemplary embodiments, the at least one sensor comprises a pressure sensor having a first/native pressure sensor range. And the executable instructions include executable instructions, that when executed by the at least one processor, cause the controller to: automatically determine a second pressure sensor range for the pressure sensor that is narrower than the first/native pressure sensor range; and after automatically determining the second pressure sensor range, automatically adjust/reconfigure the pressure sensor in the field such that the pressure sensor is operable with the second pressure sensor range instead of the first/native pressure range. For example, the pressure sensor may comprise a BLUETOOTH-enabled pressure sensor. And the executable instructions include executable instructions, that when executed by the at least one processor, cause the controller to automatically adjust/reconfigure the BLUETOOTH-enabled pressure sensor in the field via BLUETOOTH communications between the controller and the BLUETOOTH-enabled pressure sensor such that the BLUETOOTH-enabled pressure sensor is operable with the second pressure sensor range. The executable instructions may also include executable instructions, that when executed by the at least one processor, cause the controller to: sweep or cycle a pump thru its entire operating range while analyzing pressures to determine minimum and maximum pressure values; and after determining the minimum and maximum pressure values, automatically adjust/reconfigure the pressure sensor in the field such that the pressure sensor is operable with the second pressure sensor range as defined by the minimum and maximum pressure values (which may also include +/- tolerances) while sensing pressure of the pump.

In exemplary embodiments, the at least one sensor comprises a flow sensor having a first/native flow sensor range. And the executable instructions include executable instructions, that when executed by the at least one processor, cause the controller to automatically determine a second flow sensor range for the flow sensor that is narrower than the first/native flow sensor range; and after automatically determining the second flow sensor range, automatically adjust/reconfigure the flow sensor in the field such that the flow sensor is operable with the second flow sensor range instead of the first/native sensor range. For example, the flow sensor may comprise a ModBus-enabled flow sensor. And the executable instructions include executable instructions, that when executed by the at least one processor, cause the controller to automatically adjust/reconfigure the ModBus-enabled flow sensor in the field via ModBus data communications between the controller and the ModBus-enabled flow sensor such that the ModBus-enabled flow sensor is operable with the second flow sensor range. The executable instructions may also include executable instructions, that when executed by the at least one processor, cause the controller to: sweep or cycle a pump thru its entire operating range while analyzing flow to determine minimum and maximum flow values; and after determining the minimum and maximum flow values, automatically adjust/reconfigure the flow sensor in the field such that the flow sensor is operable with the second flow sensor range as defined by the minimum and maximum flow values (which may also include +/- tolerances) while sensing flow of the pump.

In exemplary embodiments, the executable instructions include executable instructions, that when executed by the at least one processor, cause the controller to initiate and execute a machine learning process while the at least one sensor is operable with the narrower sensor range for sensing the parameter to be monitored for the at least one system component. For example, the executable instructions may include executable instructions, that when executed by the at least one processor, cause the controller to learn, via machine learning, a normal level for the parameter to be monitored across a full operational range of the at least one system component while the at least one sensor is operable with the narrower sensor range for sensing the parameter to be monitored for the at least one system component, thereby enabling the controller to be operable for comparing the monitored parameter to the learned normal level for detecting an issue(s) or problem(s) associated with the monitored parameter within the full operational range of the system component.

In exemplary embodiments, the executable instructions include executable instructions, that when executed by the at least one processor, cause the controller to: compare the monitored parameter to the learned normal level to determine whether the monitored parameter is within an acceptable range or error threshold; and generate an alert if the monitored parameter is determined to be outside the acceptable range or error threshold.

In exemplary embodiments, the executable instructions include executable instructions, that when executed by the at least one processor, cause the controller to algorithmically learn, via an artificial intelligence (AI) machine learning algorithm, the normal level for the parameter to be monitored across the full operational range of the system component.

In exemplary embodiments, the executable instructions include executable instructions, that when executed by the at least one processor, cause the controller to:
(a) determine RPM sampling points for creating an interpolated mapping of the at least one sensor;
(b) begin sampling and proceed to a first RPM point;
(c) wait a configured settling time before sampling for a configured sampling time;
(d) determine whether or not a most recent sample was a last RPM sampling point;
(e) if it is determined that the most recent sample was not the last RPM sampling point, then proceed to a next RPM sampling point and return to (c);
(f) if it is determined that the most recent sample was the last RPM sampling point, then start a focus range determination for the at least one sensor;
(g) determine a minimum measured valued for the at least one sensor;
(h) apply a negative tolerance to the minimum measured value determined for the at least one sensor to thereby establish a minimum value for the narrower sensor range;
(i) determine a maximum measured valued for the at least one sensor;
(j) apply a positive tolerance to the maximum measured value determined for the at least one sensor to thereby establish a maximum value for the narrower sensor range;
(k) reconfigure the at least one sensor to have the narrower sensor range defined by the minimum and maximum values, thereby increasing sensor resolution;
(l) determine whether the at least one sensor reconfigured to have the narrower sensor range is the last sensor; and
(m) if it is determined that the at least one sensor reconfigured to have the narrower sensor range is not the last sensor, move to a next sensor and return to (g) for the next sensor.

In exemplary embodiments, a controller comprises a non-transitory computer-readable storage media including executable instructions as disclosed herein and at least one processor operable for executing the executable instructions of the non-transitory computer-readable storage media.

As will be appreciated based on the foregoing specification, the above-described embodiments of the disclosure may be implemented using computer programming or engineering techniques including computer software, firmware, hardware, or any combination or subset thereof, wherein the technical effect may be achieved by performing the following operations: automatically determining a narrower sensor range for at least one sensor for sensing a parameter to be monitored for at least one system component; and after automatically determining the narrower sensor range, automatically adjusting/reconfiguring the at least one sensor in the field such that the at least one sensor is operable with the narrower sensor range thereby increasing sensor resolution while sensing the parameter to be monitored for the at least one system component.

Exemplary embodiments may include one or more processors and memory coupled to (and in communication with) the one or more processors. A processor may include one or more processing units (*e.g.,* in a multi-core configuration, *etc*.) such as, and without limitation, a central processing unit (CPU), a microcontroller, a reduced instruction set computer (RISC) processor, an application specific integrated circuit (ASIC), a programmable logic device (PLD), a gate array, and/or any other circuit or processor capable of the functions described herein.

It should be appreciated that the functions described herein, in some embodiments, may be described in computer executable instructions stored on a computer readable media, and executable by at least one processor. The computer readable media is a non-transitory computer readable storage medium. By way of example, and not limitation, such computer-readable media can include dynamic random access memory (DRAM), static random access memory (SRAM), read only memory (ROM), erasable programmable read only memory (EPROM), solid state devices, flash drives, CD-ROMs, thumb drives, floppy disks, tapes, hard disks, other optical disk storage, magnetic disk storage or other magnetic storage devices, any other type of volatile or nonvolatile physical or tangible computer-readable media, or other medium that can be used to carry or store desired program code in the form of instructions or data structures and that can be accessed by a computer. Combinations of the above should also be included within the scope of computer-readable media.

Computer-executable instructions may be stored in the memory for execution by a processor to particularly cause the processor to perform one or more of the functions described herein, such that the memory is a physical, tangible, and non-transitory computer readable storage media. Such instructions often improve the efficiencies and/or performance of the processor that is performing one or more of the various operations herein. It should be appreciated that the memory may include a variety of different memories, each implemented in one or more of the functions or processes described herein.

It should also be appreciated that one or more aspects of the present disclosure transform a general-purpose computing device into a special-purpose computing device when configured to perform the functions, methods, and/or processes described herein.

Example embodiments are provided so that this disclosure will be thorough and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms, and that neither should be construed to limit the scope of the disclosure. In some example embodiments, well-known processes, well-known device structures, and well-known technologies are not described in detail. In addition, advantages and improvements that may be achieved with one or more exemplary embodiments of the present disclosure are provided for purposes of illustration only and do not limit the scope of the present disclosure, as exemplary embodiments disclosed herein may provide all or none of the above mentioned advantages and improvements and still fall within the scope of the present disclosure.

Specific dimensions, specific materials, and/or specific shapes disclosed herein are example in nature and do not limit the scope of the present disclosure. The disclosure herein of particular values and particular ranges of values for given parameters are not exclusive of other values and ranges of values that may be useful in one or more of the examples disclosed herein. Moreover, it is envisioned that any two particular values for a specific parameter stated herein may define the endpoints of a range of values that may be suitable for the given parameter (*i.e.,* the disclosure of a first value and a second value for a given parameter can be interpreted as disclosing that any value between the first and second values could also be employed for the given parameter). For example, if Parameter X is exemplified herein to have value A and also exemplified to have value Z, it is envisioned that parameter X may have a range of values from about A to about Z. Similarly, it is envisioned that disclosure of two or more ranges of values for a parameter (whether such ranges are nested, overlapping or distinct) subsume all possible combination of ranges for the value that might be claimed using endpoints of the disclosed ranges. For example, if parameter X is exemplified herein to have values in the range of 1 - 10, or 2 - 9, or 3 - 8, it is also envisioned that Parameter X may have other ranges of values including 1 - 9, 1 - 8, 1 - 3, 1 - 2, 2 - 10, 2 - 8, 2 - 3, 3 - 10, and 3 - 9.

The term "about" when applied to values indicates that the calculation or the measurement allows some slight imprecision in the value (with some approach to exactness in the value; approximately or reasonably close to the value; nearly). If, for some reason, the imprecision provided by "about" is not otherwise understood in the art with this ordinary meaning, then "about" as used herein indicates at least variations that may arise from ordinary methods of measuring or using such parameters. For example, the terms "generally", "about", and "substantially" may be used herein to mean within manufacturing tolerances.

The terminology used herein is for the purpose of describing particular example embodiments only and is not intended to be limiting. For example, when permissive phrases, such as "may comprise", "may include", and the like, are used herein, at least one embodiment comprises or includes the feature(s). As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on,'' "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (*e.g*., "between" versus "directly between," "adjacent" versus "directly adjacent," *etc.*)*.* As used herein, the term "and/or" includes any and all combinations of one or more of the associated listed items.

Although the terms first, second, third, *etc.* may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

None of the elements recited in the claims are intended to be a means-plus-function element within the meaning of 35 U.S.C. §112(f) unless an element is expressly recited using the phrase "means for," or in the case of a method claim using the phrases "operation for" or "step for."

The foregoing description of the embodiments has been provided for purposes of illustration and description. It is not intended to be exhaustive or to limit the disclosure. Individual elements, intended or stated uses, or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A controller configured to be operable for controlling at least one system component, the controller further configured to be operable for:
automatically determining a narrower sensor range for at least one sensor for sensing a parameter to be monitored for the at least one system component; and
after automatically determining the narrower sensor range, automatically adjusting/reconfiguring the at least one sensor in the field such that the at least one sensor is operable with the narrower sensor range thereby increasing sensor resolution while sensing the parameter to be monitored for the at least one system component.

2. The controller of claim 1, wherein:
the at least one sensor has a first/native sensor range; and
the controller is configured to be operable for:
automatically determining a second sensor range for the at least one sensor that is narrower than the first/native sensor range; and
after automatically determining the second sensor range, automatically adjusting/reconfiguring the at least one sensor in the field such that the at least one sensor is operable with the second sensor range thereby increasing sensor resolution while sensing the parameter to be monitored for the at least one system component.

3. The controller of any preceding claim, wherein:
the at least one sensor comprises a BLUETOOTH-enabled sensor, and the controller is configured to be operable for automatically adjusting/reconfiguring the BLUETOOTH-enabled sensor in the field via BLUETOOTH communications such that the BLUETOOTH-enabled sensor is operable with the narrower sensor range while sensing the parameter to be monitored for the at least one system component; and/or
the at least one sensor comprises a ModBus-enabled sensor, and the controller is configured to be operable for automatically adjusting/reconfiguring the ModBus-enabled sensor in the field via ModBus data communications protocol such that the ModBus-enabled sensor is operable with the narrower sensor range while sensing the parameter to be monitored for the at least one system component.

4. The controller of any preceding claim, wherein:
the controller is configured to be operable for sweeping or cycling the at least one system component thru its entire operating range to determine minimum and maximum parameter values for the narrower sensor range; and
after determining the minimum and maximum values, the controller is configured to be operable for automatically adjusting/reconfiguring the at least one sensor in the field such that the at least one sensor is operable with the narrower sensor range as defined by the minimum and maximum values (which may also include +/- tolerances) while sensing the parameter to be monitored for the at least one system component.

5. The controller of any preceding claim, wherein:
the at least one sensor comprises a pressure sensor having a first/native pressure sensor range;
the controller is configured to be operable for automatically determining a second pressure sensor range for the pressure sensor that is narrower than the first/native pressure sensor range; and
after automatically determining the second pressure sensor range, the controller is configured to be operable for automatically adjusting/reconfiguring the pressure sensor in the field such that the pressure sensor is operable with the second pressure sensor range instead of the first/native pressure range.

6. The controller of claim 5, wherein:
the pressure sensor comprises a BLUETOOTH-enabled pressure sensor, and the controller is configured to be operable for automatically adjusting/reconfiguring the BLUETOOTH-enabled pressure sensor in the field via BLUETOOTH communications such that the BLUETOOTH-enabled pressure sensor is operable with the second pressure sensor range; and/or
the controller is configured to be operable for sweeping or cycling a pump thru its entire operating range while analyzing pressures to determine minimum and maximum pressure values, and after determining the minimum and maximum pressure values, the controller is configured to be operable for automatically adjusting/reconfiguring the pressure sensor in the field such that the pressure sensor is operable with the second pressure sensor range as defined by the minimum and maximum pressure values (which may also include +/- tolerances) while sensing pressure of the pump.

7. The controller of any preceding claim, wherein:
the at least one sensor comprises a flow sensor having a first/native flow sensor range;
the controller is configured to be operable for automatically determining a second flow sensor range for the flow sensor that is narrower than the first/native flow sensor range; and
after automatically determining the second flow sensor range, the controller is configured to be operable for automatically adjusting/reconfiguring the flow sensor in the field such that the flow sensor is operable with the second flow sensor range instead of the first/native sensor range.

8. The controller of claim 7, wherein:
the flow sensor comprises a ModBus-enabled flow sensor, and the controller is configured to be operable for automatically adjusting/reconfiguring the ModBus-enabled flow sensor in the field via ModBus data communications protocol such that the ModBus-enabled flow sensor is operable with the second flow sensor range; and/or
the controller is configured to be operable for sweeping or cycling a pump thru its entire operating range while analyzing flow to determine minimum and maximum flow values, and after determining the minimum and maximum flow values, the controller is configured to be operable for automatically adjusting/reconfiguring the flow sensor in the field, such that the flow sensor is operable with the second flow sensor range as defined by the minimum and maximum flow values (which may also include +/- tolerances) while sensing flow of the pump.

9. The controller of any preceding claim, wherein the controller is configured to be operable for:
(a) determining RPM sampling points for creating an interpolated mapping of the at least one sensor;
(b) beginning sampling and proceeding to a first RPM point;
(c) waiting a configured settling time before sampling for a configured sampling time;
(d) determining whether or not a most recent sample was a last RPM sampling point;
(e) if it is determined that the most recent sample was not the last RPM sampling point, then proceeding to a next RPM sampling point and returning to (c);
(f) if it is determined that the most recent sample was the last RPM sampling point, then starting a focus range determination for the at least one sensor;
(g) determining a minimum measured valued for the at least one sensor;
(h) applying a negative tolerance to the minimum measured value determined for the at least one sensor to thereby establish a minimum value for the narrower sensor range;
(i) determing a maximum measured valued for the at least one sensor;
(j) applying a positive tolerance to the maximum measured value determined for the at least one sensor to thereby establish a maximum value for the narrower sensor range;
(k) reconfiguring the at least one sensor to have the narrower sensor range defined by the minimum and maximum measured values, thereby increasing sensor resolution;
(l) determining whether the at least one sensor reconfigured to have the narrower sensor range is a last sensor; and
(m) if it is determined that the at least one sensor reconfigured to have the narrower sensor range is not the last sensor, moving to a next sensor and returning to (g) for the next sensor.

10. The controller of any preceding claim, wherein the controller is configured to be operable for algorithmically learning, via an artificial intelligence (AI) machine learning algorithm, a normal level for the parameter to be monitored across a full operational range of the at least one system component while the at least one sensor is operable with the narrower sensor range for sensing the parameter to be monitored for the at least one system component.

11. The controller of any preceding claim, wherein:
the at least one sensor comprises a torque sensor for a motor;
the controller is operable for sweeping or cycling the motor across its full RPM operational range while analyzing torque to determine minimum and maximum torque values for the torque sensor; and
after determining the minimum and maximum torque values, the controller is operable for automatically reconfiguring/adjusting the torque sensor to torque range based on the minimum and maximum torque values (which may also include +/- tolerances) while sensing the torque of the motor.

12. The controller of any preceding claim, wherein:
the at least one sensor comprises a power consumption sensor for a motor; and
the controller is operable for sweeping or cycling the motor across its full RPM operational range while analyzing power consumption to determine minimum and maximum power consumption values for the power consumption sensor; and
after determining the minimum and maximum power consumption values, the controller is operable for automatically reconfiguring/adjusting the power consumption sensor to a power consumption range based on the minimum and maximum power consumption values (which may also include +/- tolerances) while sensing the power consumption by the motor.

13. A system comprising the controller of any preceding claim, wherein:
the at least one system component comprises multiple pumps configured to be operable in a lead-lag pump operational mode that alternates the operating pump each time a start event occurs;
the at least one sensor comprises multiple sensors associated with the multiple pumps; and
the controller is configured to be operable for:
automatically determining minimum and maximum parameter values for the narrower sensor range for all of the multiple pumps that are in the rotation;
after automatically determining the minimum and maximum parameter values for the narrower sensor range for all of the multiple pumps that are in the rotation:
automatically adjusting/reconfiguring all of the sensors in the field once with the lowest minimum parameter value and highest maximum parameter value for the narrower sensor range across all of the multiple pumps that are in the rotation; or
automatically adjusting/reconfiguring the sensors in the field each time a pump is started using that particular operating pump's minimum and maximum parameter values for the narrower sensor range.

14. A system comprising the controller of any one of claims 1 to 12, wherein:
the at least one system component comprises multiple pumps configured to be operable in a synchronous pump operational mode in which the multiple pumps simultaneously run in parallel;
the at least one sensor comprises multiple sensors associated with the multiple pumps; and
the controller is configured to be operable for:
automatically determining minimum and maximum parameter values for the entire system; and
after automatically determining the minimum and maximum parameter values for the entire system, automatically adjusting/reconfiguring all of the sensors in the field to have the narrower sensor range defined by the lowest minimum parameter value and highest maximum parameter value for the entire system.

15. A system comprising the controller of any one of claims 1 to 12, wherein:
the at least one system component comprises multiple pumps configured to be operable in a parallel pump operational mode in which at any time a particular pump may be running by itself;
the at least one sensor comprises multiple sensors associated with the multiple pumps; and
the controller is configured to be operable for:
automatically determining the minimum parameter value based on the particular pump running;
automatically determining the maximum parameter value as the combination of all the pumps running; and
after automatically determining the minimum and maximum parameter values, automatically adjusting/reconfiguring the sensors in the field to have the narrower sensor range defined by the lowest minimum parameter value and highest maximum parameter value.
